# EUROPEAN PATENT SPECIFICATION

(11) **EP 3 027 370 B1**
(45) Date of publication and mention of the grant of the patent: **25.10.2017**
(21) Application number: 14747025.6
(22) Date of filing: 01.08.2014
(51) Int. Cl.: B29B 7/76, B29C 67/24, B29C 44/34

(54) **INJECTING DEVICE AS WELL AS APPARATUS AND METHOD FOR MIXING POLYMER COMPONENTS USING THE SAME**
EINSPRITZBAUGRUPPE SOWIE VORRICHTUNG UND VERFAHREN ZUM MISCHEN VON POLYMERKOMPONENTEN UNTER VERWENDUNG DERSELBEN
MODULE D'INJECTION AINSI QUE DISPOSITIF ET PROCÉDÉ POUR MÉLANGER DES COMPOSANTS POLYMÈRES L'UTILISANT

(30) Priority: 02.08.2013 IT MI20131319
(43) Date of publication of application: 08.06.2016
(73) Proprietor: Afros S.p.A., 20121 Milano (IT)
(72) Inventor: FIORENTINI, Carlo, I-20121 Milan (IT); CORTI, Maurizio, I-20121 Milan (IT)
(74) Representative: Candito, Rocco
(86) International application number: PCT/EP2014/066649
(87) International publication number: WO 2015/015002

(56) References cited:
- EP-A1- 0 423 574
- US-A- 3 926 219
- US-A- 4 030 637
- US-A- 4 068 829
- US-A- 4 070 008
- US-A- 4 115 066
- US-A- 5 082 633

## Description

### BACKGROUND OF THE INVENTION

The present invention relates to an injecting device that can be used in the field of the production of reactive polymer mixtures. The invention also comprises an apparatus that includes a mixing head for the co-injection of active polymer components, which head comprises two or more injecting devices according to the invention.

### STATE OF THE ART

Mixing heads are known, comprising a mixing chamber in which two or more opposite injectors open, each of which is supplied with chemical components that have to be intimately mixed to form a mixture capable of reacting inside a forming mould. The injectors comprise a conic nozzle converging towards the mixing chamber, and a pin-shaped element that, by mutually cooperating, act for converting the pressure energy into speed and turbulence of the jet.
The intrinsic turbulence of the jet and the collision against the other jet or against a wall of the mixing chamber give rise to a so-called "high pressure" mixing via turbulence of the two chemical components.
The mixture flows through an ejection conduit inside the forming mould. The mixing chamber can be part of the mixture dispensing conduit (straight heads) or be perpendicular to the mixture dispensing conduit (L-shaped heads). However, a mixing and guide conduit is provided that extends along a longitudinal axis of the head and slidably housing a slide valve for the recirculation of the polymer components. The slide valve is movable alternately in the mixing and guide conduit along the aforesaid longitudinal axis. The injectors are arranged according to respective axes that are arranged transversally to the aforesaid longitudinal axis.

In order to obtain a high mixing repetitiveness, when the flow-rate of the jet dispensed by each injector is varied, it is necessary to maintain the pressure upstream of the injector as much constant as possible so as to avoid build-ups of flow-rate due to several factors, such as the possible elasticity of some supply conduits for the resins and, particularly, the compressibility properties of the resins and the variation in efficiency of the metering pumps.

In the mixing heads of the kind set forth above, there is the need to adjust the narrow active section of the nozzles in each single injector so that the components - that have to be supplied with flow rates having precise stoichiometric ratios - keep the required pressure upstream of the nozzle such as to provide to the jets the necessary mixing energy and turbulence. Usually, to adapt the injector active section to the flow rate, one intervenes, by means of suitable adjusting devices included in the injector, by moving axially the pin-shaped element and thereby displacing the conic end thereof inside the convergent conic length of the nozzle conduit. In some injectors with a pin-shaped valve, the adjusting device comprises an adjusting screw or another presetting device, in some cases of an automatic type, arranged axially aligned to the respective pin-shaped element, and by which the position of a rear abutment for the pin-shaped element is changed. The abutment position can be varied along the movement direction of the pin-shaped element. An axial contrasting spring can be coupled to the adjusting screw, for example, a coil spring, which pushes with an elastic preload the pin-shaped valve against the injection nozzle. The adjusting device sets the pin initial position so as to adjust the nozzle narrow active section, and, if it is coupled to the contrasting coil spring, generates a preload force of the spring that, during the supply of the polymer components, yields due to the pressure exerted by the same chemical component on the pin-shaped valve, making it to move back so as to increase the narrow active section, so as to balance and adjust the pressure that originates the jet upstream of the narrow section. In other cases, springs of the cup, bellow type, or other types of axial springs are provided. The spring, once that it has been preloaded as a function of the reference flow-rate/pressure, in operation works releasing or further loading with respect to the preload value, respectively according to the flow-rate decrease or increase. In other terms, the spring is subjected to a yielding that depends on the pressure variation, which is followed by a variation in the nozzle narrow active section. The lower the elastic constant of the spring is, the lower the pressure variation is, compared to the flow-rate variation, thus, a predetermined variation in the nozzle narrow section is obtained. In other terms, the lower the elastic constant of the spring is, the lower the pressure variation is, to which a corresponding variation in the nozzle narrow section follows. Therefore, a high sensitivity of the injector to the fluid-dynamic variations would correspond to very low elastic constant values, hence a more accurate control of the injection parameters. However, in order to have lower elastic constants, the adoption would be needed of very soft coil springs, which would cause even more significant overall dimensions, or springs with very reduced wire sections, which would have a too high stress state and problems in the resistance to the applied loads.

Other types of injectors are provided with automatic hydraulic or electric actuators that can move the position of the contrasting element, or increase or decrease the preload of the associated spring. In some cases, small hydraulic pistons acting directly on the pin to move it to the suitable position are also adopted.

Examples of injectors configured as just described, or in a similar manner, are known, for example, from US 4,070,008, US 3,933,312, US 3,926,219. From EP0423574 a mixing and injection device is known, that however uses devices that are structurally and functionally very different compared to the preceding injector devices described above, that lacks pin-shaped injectors and that is, instead, provided with metering pistons that are moved linearly in an alternating manner and alternating directions, having however non-negligible dimensions.

In all the cases, as already stated above, the injectors are arranged according to respective axes that are arranged transversally to the aforesaid longitudinal axis. Particularly, the axes of the injectors are arranged according to an angle ranging between about 75° and about 105° with respect to the aforesaid longitudinal axis and the respective adjusting devices, thus the screws with the associate springs, or the actuators or contrasting elements, in all the solutions with a pin-shaped element, extend in a manner axially aligned to the respective pin-shaped element. In other terms, the adjusting devices extend with considerable overall dimensions (also greater than 30 ÷ 45 % of the mixing head section) along a transverse direction, particularly orthogonal, to the aforesaid head longitudinal axis. The above-described configuration of the adjusting devices of the pins of the injectors involves considerable overall transversal dimensions of the mixing head, i.e., along the movement directions of the pin-shaped elements, which have to be taken into account when moving the entire head and for the approaching operations, and especially for the coupling of the head to the mould to perform the dispensing of the mixture, particularly in the cases where the moulds are of a quite complex shape, a high thickness or very reduced maneuver spaces.

In other terms, the transversal overall dimensions of the mixing head, mainly due to the structural and geometrical conformation of the adjusting devices of the injectors, make the proper insertion or the access of the dispensing mouth of the head into the moulds difficult, or even impossible in some cases.

To the aforesaid overall dimensions along the movement directions of the pin-shaped elements, the further overall dimensions are added, also in a radial direction with respect to the pin-shaped elements. Also such radial overall dimensions are quite significant, due to the axial springs or the actuators that, having to be capable of accumulating the contrasting energy for the pin-shaped element in a direction axially aligned to the latter, need, and are housed in, significant volumes.

From US4068829 a mixing head is known, comprising a main body on which synchronized dispensing valves are mounted, for the different polymer components, arranged transversally with respect to the main longitudinal axis of the head. In the main body, a main conduit extends longitudinally, inside which a slidable drive element is movable, which has an enlarged shape, that is moved by an upper piston and that is provided, in an intermediate zone thereof, with inclined ramp surfaces. The inclined ramp surfaces actuate simultaneously two transversal bars, so as to move both of them, thus synchronizing them to opposite directions, orthogonal to the head longitudinal axis, to simultaneously act, by interposed hinged positioning levers, on the rear ends of the stems of the corresponding distribution valves. The positioning levers are connected in an articulated manner to the rear ends of the stems of the synchronized dispensing valves and are preloaded outwardly by suitable compression springs that extend transversally to the aforesaid longitudinal axis of the mixing head, with quite significant overall transversal dimensions. The two synchronized distribution valves are then both connected, by the positioning levers, to the aforesaid central slidable drive element.

With such configuration, the movement and the position of the distribution valves are thus linked to, and dependent on, the movement and position of the central slidable drive member, which, by moving longitudinally, acts as a linear cam and exerts, by means of the aforesaid inclined ramp surfaces, the position of the valves. The adjustment of a desired opening degree of the distribution valves can be carried out before an injection cycle, acting on special setting screws. Once the setting operations are completed, the two distribution valves are actuated and move simultaneously with respect to one another, both being cinematically dependent on the same shared dive member, i.e., the aforesaid central slidable drive element. Therefore, such structural configuration involves a forced "synchronous" movement of the two distribution valves, which also have the task to recirculate the polymer components when the central element closes the dispensing conduit, and this can be constraining where instead it is desired to actuate a valve with modes and times that are different with respect to the other valve, for example, for varying, in a "real-time" way, a mixing ratio of the separate components. Furthermore, due to this structural configuration, if for example a variation should occur in the flow-rate of one of the polymer components, for example due to a disturbance on the corresponding supply line connected to a specific distribution valve, the relative and right proportion of the two polymer components to be mixed would unfortunately not be met, being impossible to selectively act on the single distribution valves in a manner that is independent from one other to correct the relative positions thereof and to obtain the proper opening degrees in order to restore the proper pressure setting and consequently the proportion of the polymer components.

In the mixing head described in US4068829, the recirculation of the polymer components is achieved by a system of passages and conduits that connect the housings that contain the corresponding distribution valves to the respective storing tanks. The distribution valves, together with the respective housings, are configured so that to a retracted position of the distribution valves with respect to the main conduit of dispensing corresponds a dispensing step of the polymer components to a mould, while to an advanced position of the distribution valves towards the main dispensing conduit corresponds a closure of the corresponding nozzles and a recirculation of the components that, passing internally through the casings of the distribution valves, are deflected to the respective storing tanks. Therefore, during a standard operation of such head, the distribution valves, moved in a mutually synchronized manner by the central slidable drive element, are continuously alternating moved between the retracted position and the advanced position to enable passage from an operative step of dispensing and injection into a mould and a recirculation step that occurs when the filling of such mould has ended, and it is needed to be ready to inject into the next mould. Unfortunately, such configuration subjects the valves to frequent position variations (alternating continuously between a "recirculation step", and an "active injection step") and it does not prevent that whenever the valves are arranged in the "active injection step", transitory conditions may occur, which can affect the "repetitiveness" of the injection cycles.

Furthermore, it is to be pointed out that in order to avoid the leakage to the exterior of the polymer components that flow internally into the casings of the above-mentioned distribution valves, it is necessary to provide special efficient sealing couplings, interposed between the conic sections of the valves and the internal surfaces of the aforesaid casings. On the contrary, there would be the risk to lose the polymer components to the recirculation and the risk of heavy errors in the dispensing ration.

In all the apparatuses and adjusting devices described above, furthermore, hysteresis phenomena may occur, affecting the contrasting springs, and frictions due to the hydraulic seals that negatively affect the operation of the pin-shaped valves, causing on the latter ones a snap and/or uneven movement and a consequent snap adjustment of the pressure.
Many pin-shaped elements are provided with seal gaskets that, sliding on the internal surface of the hollow body housing the pin-shaped element, generate a friction and stick slip phenomena, which negatively affect the injector operation. On the other hand, the possible elimination of the sealing gaskets would involve a leakage of the resin, for example isocyanate, towards the rear zone of the pin-shaped element, which, if it is not drained, would crystallize, thus causing adverse incrustations for the proper operation of the injector.

### OBJECTS OF THE INVENTION

A main object of the present invention is to improve the mixing apparatuses. Particularly, an object of the invention is to provide an injecting device, hence an apparatus, comprising at least two of such injecting devices, which allow an easier and more versatile dispensing of polymer mixture in a mould or on another support, even in the presence of very reduced access spaces.

An object of the present invention is to provide a control system capable of generating a self-adaptive movement of the pin-shaped element of each injecting device, so as to adapt a narrow nozzle section to the variations in the flow-rate with a moderate variation of the upstream pressure, the latter being converted by the nozzle into the kinetic energy necessary for the high-turbulence mixing of the polymer components. Another object is to provide an injecting device provided with a adjusting device capable of ensuring very reduced pressure variations as the flow-rate of the resins varies, thus ensuring a more accurate control over the injection parameters of the resins, particularly, providing the adjusting device with the sufficient volume, avoiding to increase the side overall dimensions to accumulate the elastic energy for contrasting the pressure without exceeding the fatigue stress conditions, where by the aforesaid elastic energy is meant the product of the pressure by the thrusting section of the pin, integrated by the displacement of the latter.
A further object is to provide an injecting device provided with an adjusting unit capable of enabling a more regular, rapid, and precise drive of the pin-shaped valves through a solution that is constructively and functionally simple also on the hydraulic seals.
A still further object is to provide a solution that allows sensibly reducing, or even completely eliminating, the drawbacks due to the friction and stick-slip phenomena affecting the pin-shaped elements, and that prevents build-up and fouling phenomena of the resins in the injectors from establishing, particularly in the zones arranged posteriorly with respect to the pin-shaped elements.

### BRIEF DESCRIPTION OF THE INVENTION

According to the invention, an injecting device according to claim 1 is provided, for feeding a polymer component in a mixing head to produce foams and polymer resins and moulded items, comprising:
- a hollow body extending along a first axis and having a supply opening into which a supply conduit for the polymer component opens, and a nozzle orifice suitable for communicating with a mixing and guide conduit of said mixing head that extends along a longitudinal axis that is arranged transversely with respect to said first axis, said mixing and guide conduit housing a slide valve slidable for the recirculation of the polymer components, that is slidable along said longitudinal axis, between a retracted position of non-recirculation and dispensing of the jets into a mixing space, and an advanced position for the recirculation of the polymer components,
- said slide valve being provided with longitudinal recesses for placing in communication, in said advanced position, each nozzle orifice with a respective recirculating conduit for conveying the respective polymer component to a collecting and storing tank,
- a pin-shaped throttling and control element, slidably housed in said hollow body and configured for varying a narrow active section of said nozzle orifice for converting into kinetic energy of the jet the pressure energy of the respective polymer component, said throttling and control element being movable with respect to said nozzle orifice along said first axis,
- said throttling and control element being shaped for receiving from said polymer component delivered in said hollow body a pressure tending to remove a tip portion of said throttling and control element from said nozzle orifice, varying said narrow active section thereof,
- an adjusting and contrasting unit configured for exerting on said throttling and control element a pre-load and thrust action suitable for setting up said element, preliminarily, in an initial positioning and/or preload condition so as to adjust said narrow active section to a reference flow-rate and pressure of said polymer component,
said adjusting and contrasting unit being so configured as to extend with a prevalent dimension in a main extending direction that is parallel to said longitudinal axis, so as to reduce the overall dimensions of said mixing head in a transverse direction to said longitudinal axis and occupy a volume that expands prevalently in said main extending direction,
CHARACTERIZED IN THAT
said adjusting and contrasting unit is configured to be able to continuously change, during an injection cycle, the position of said pin-shaped throttling and control element, so as to adjust said narrow active section in response to possible variations in the flow-rate, intentional or caused by disturbances on the supply line, and to adjust the position and/or the contrasting force to balance and adjust the pressure exerted by said polymer component for maintaining the pressure stage constant, in spite of a possible variation in the flow-rate, and in that said adjusting and contrasting unit is housed in a casing body in fluid communication with said hollow body and extending along said main direction parallel to said longitudinal axis, wherein on a wall of said casing body an opening is obtained, suitable for placing the cavity of said casing body in fluid communication with a recirculating channel obtained in said mixing head so as to send to a suitable storage tank any quantity of polymer component that might leak from said hollow body towards the interior of said casing body.

In a version, the adjusting and contrasting unit includes flexure spring means extending transversely with respect to the first axis and rotatable around a rotation axis, said flexure spring means being housed inside a casing body, wherein the casing body extends along the aforesaid main extending direction so as to provide a volume increase available for housing the flexure spring means parallel to the longitudinal axis of the head. Particularly, in such a version, the flexure spring means are configured for varying, via elastic yielding, the position of the throttling and control element to adjust the narrow active section of the nozzle orifice according to the variations in the flow-rate of said polymer component and balance the variation in force exerted by the pressure by the polymer component.

Owing to such a configuration, the injecting device makes a volume for the elastic contrasting means available that can be higher compared to the known springs axially aligned to the pin-shaped element, so as to be able to use pins with a higher section and, consequently, less sensitive to sliding frictions and to obtain a contrasting force adequate to the sliding section of the throttling and control element and to exert a higher elastic yielding while keeping the pressure variation constant, thus storing a higher elastic energy amount that ensures much more reduced pressure variations as the flow-rate varies.

In another version, the adjusting and contrasting unit comprises a thrusting element mounted on a driving-shaft that rotates around a drive axis orthogonal to the first axis of the pin-shaped element; the thrusting element, such as an eccentric bearing, acts to continuously push and reposition the pin-shaped throttling element and so as to maintain the narrow active section of the nozzle orifice adequate to the flow rate of fluid by constantly balancing the pressure exerted by the polymer component.

Owing to the opening and the conduits that place the cavity of the casing body of the adjusting and contrasting unit in communication with a recirculating channel obtained in the mixing head and connected to the storage tank, it is possible to easily drain the resin, thus avoiding to have to install purging tubes for the leaked resin, and, moreover, avoiding that the resin, for example, isocyanate, crystallizes on the seal gaskets, thus creating considerable detachment and sliding frictions. By virtue of such configuration, the drainage and recirculation are further possible of the components, avoiding using sliding seals on the pin-shaped element. Thus, it is possible to have a simple gap or fluid-film around the pin that minimizes the leakage of the polymer component and minimizes the frictions that perturb the pin adaptation movement, hence introducing a hysteresis on the adjusted pressure. Furthermore, there is provided an apparatus according to claim 23, comprising a head for mixing at least two active polymer components and at least two of said injecting devices, and a related method according to claim 24 of using such an injecting device for feeding a polymer component in a mixing head.

### BRIEF DESCRIPTION OF THE DRAWINGS

The invention will be better understood and implemented with reference to the appended drawings, which illustrate some exemplary, non-limiting embodiments thereof, in which:

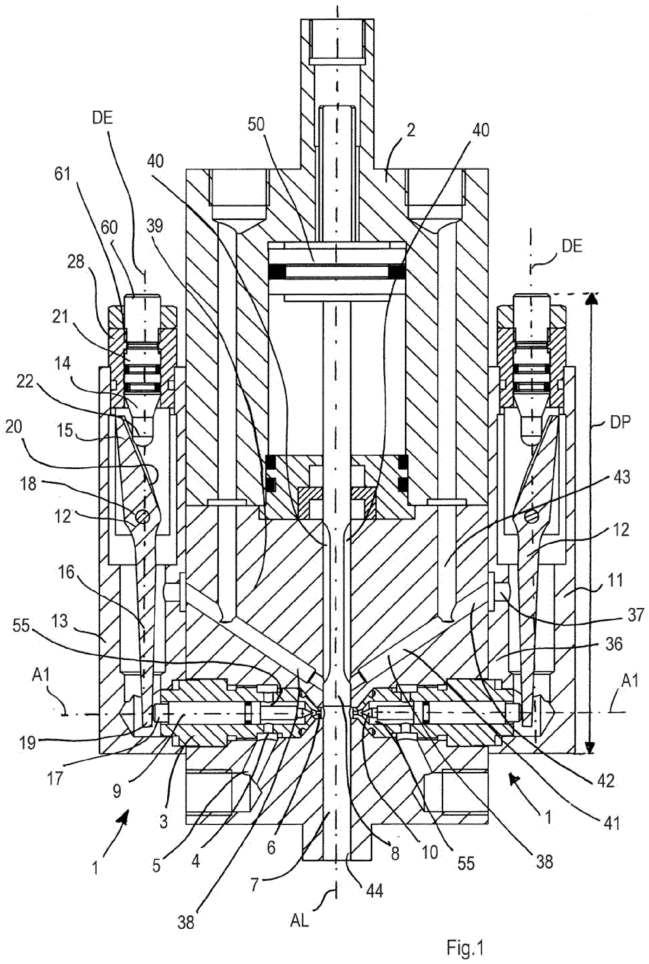

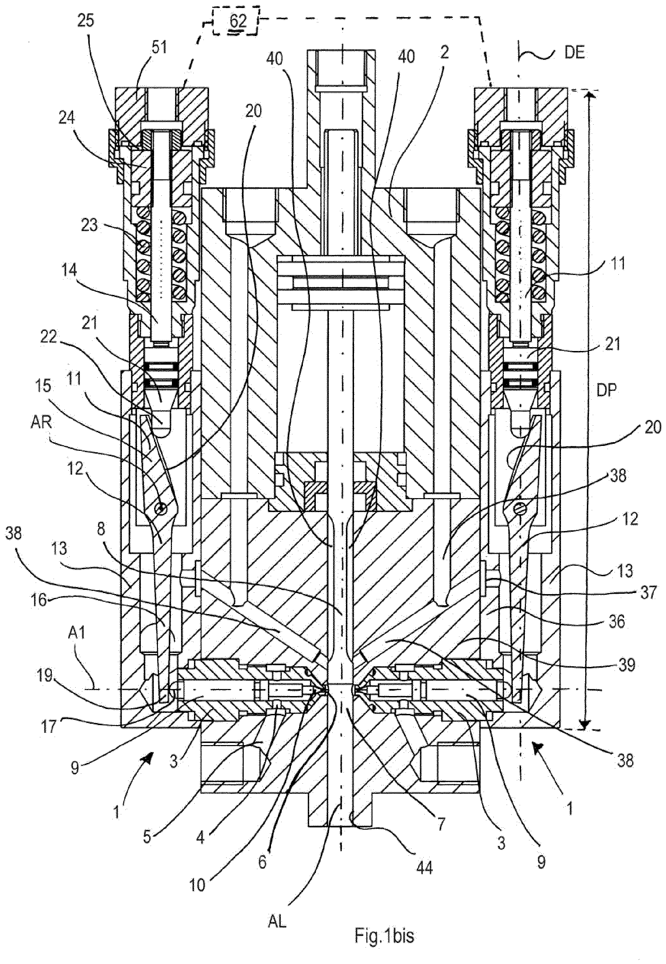

Fig. 1 is a longitudinal section of a mixing head comprising a first version of injecting devices according to the invention, wherein adjusting and contrasting units are visible, comprising flexure spring means arranged in a first operative configuration in which they are subjected to a first load action by a pusher pin included in the adjusting and contrasting unit, and in which a slide valve is visible in a retracted non-recirculation position of the active polymer components; in such a version, the adjusting units are manually actuatable.
Fig. 1bis is a longitudinal section of a mixing head comprising a second version of injecting devices according to the invention, similar to the version of Fig. 1, but the adjusting and contrasting units of which are drivable by a suitable hydraulic circuit;
Fig. 2 shows the mixing head of Fig. 1bis, wherein the flexure spring means, particularly comprising a lamina flexure bar, are arranged in a second operative configuration in which they are subjected to a second higher load action exerted by the pusher pin;
Fig. 3 shows in hatched line the lamina flexure bar in the first operative configuration of Fig. 1bis and the lamina flexure bar in a continuous line in the second operative configuration of Fig. 2;
Fig. 4 schematically shows the elastic deformation axis lines of the lamina flexure bar associated respectively to the first operative configuration and the second operative configuration;
Fig. 4A shows the trend of the stress state, calculated by the finite element method, in the flexure bar in an optimized configuration;
Fig. 5 shows the mixing head of Fig. 1bis, but with the slide valve in an advanced position for the recirculation of the active polymer components;
Fig. 6 shows a mixing head provided with a second version of adjusting and contrasting units for the injecting devices;
Fig. 7 is an enlarged detail of the injecting device and adjusting and contrasting unit of Fig. 6;
Fig. 8 is an interrupted section taken along the plane VIII-VIII in Fig. 7;
Fig. 9 is an interrupted section taken along the plane IX- IX in Fig. 8;

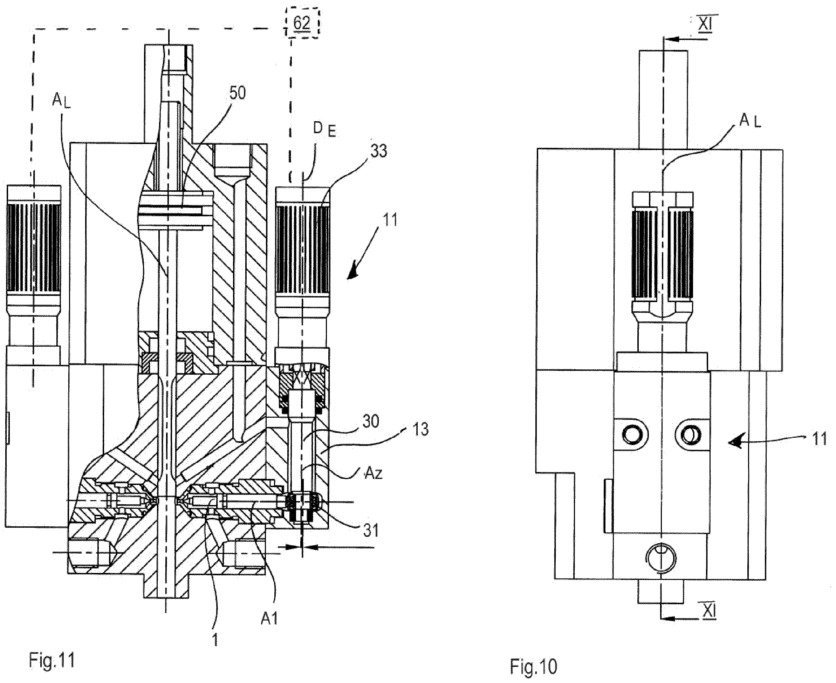

Fig. 10 shows a third version of adjusting and contrasting unit for the injecting device;
Fig. 11 is a longitudinal section taken along the plane XI-XI in Fig. 10;

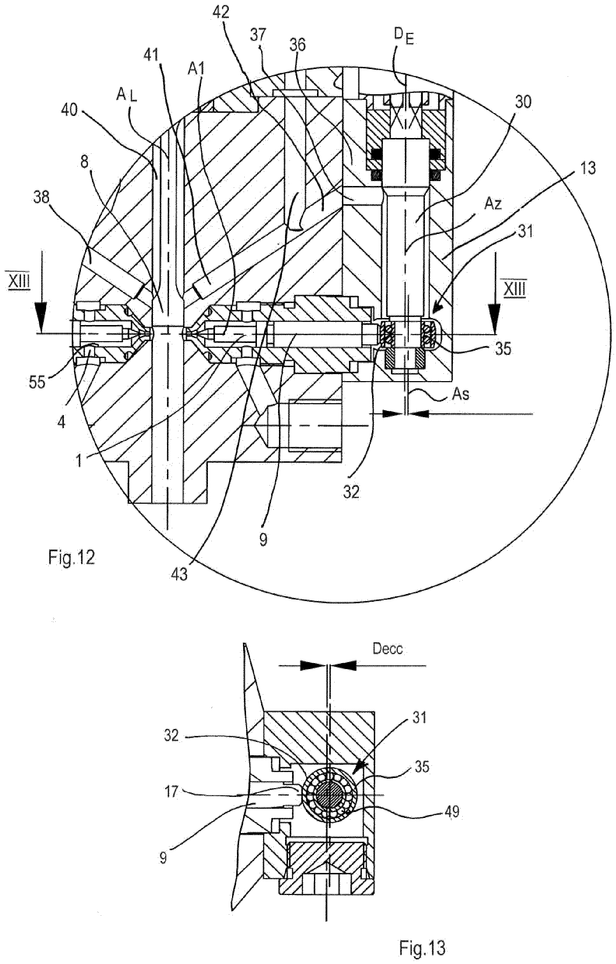

Fig. 12 is an enlarged detail of Fig. 11;
Fig. 13 is an interrupted section taken along the plane XIII- XIII in Fig. 12.

### DETAILED DESCRIPTION OF THE INVENTION

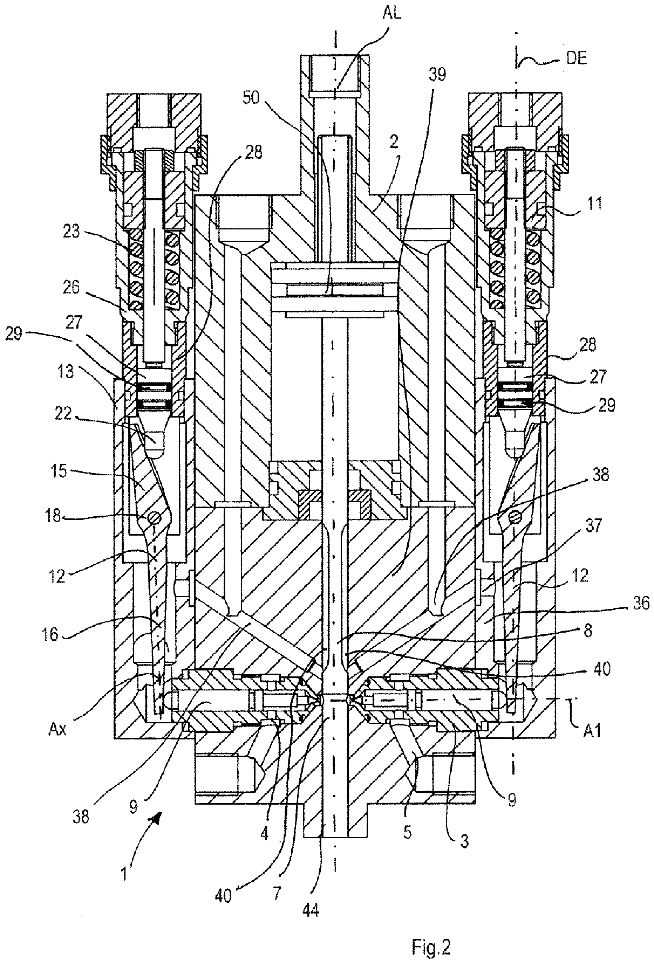

With reference to the appended Figs. 1 and 2, a mixing head 2 is shown, on which injecting devices 1 according to the invention are mounted. Each injecting device 1 performs the function of supplying, particularly injecting, in the mixing chamber 7 a respective reactive polymer component that, reacting with the other reactive polymer component(s) allows producing moulded items or foams or polymer resins, for example, polyurethane foams, epoxy resins or other items. The injecting device 1 acts for injecting the respective polymer component and mixing via turbulence the latter with at least a second polymer component. The injecting device 1 acts for converting the pressure energy into kinetic energy and turbulence of a jet.

In the exemplary version of Fig. 1, the mixing head 2 comprises two injecting devices 1, in a mutually opposite position, that supply for example respectively a polyol and an isocyanate or an epoxy resin and the respective hardener to form a quickly reacting mixture.

The mixing head 2, shown in Fig. 1, comprises a base body 39 in which a mixing and guide conduit 7 is obtained that extends along a longitudinal axis A_{L} of the mixing head 2 and housing a slide valve 8 for the recirculation of the polymer components, as best explained herein below. The mixing and guide conduit 7 performs the function of guiding the slide valve 8, movable alternately along the longitudinal axis A_{L}, and of receiving the polymer components that, once they are intimately mixed, generate the active mixture that is dispensed through an ejection conduit 44 connected, as an extension, to the mixing and guide conduit 7. The two injecting devices 1 face the mixing and guide conduit 7, which injecting devices extend according to respective axes arranged transversally with respect to the longitudinal axis A_{L}, hence with respect to the mixing and guide conduit 7. The two injecting devices 1 extend according to respective firs axes A1 arranged transversally to the longitudinal axis A_{L}, with an angle equal to 90+/- 35°. In the exemplary, non-limiting versions shown in the appended figures, particularly, the aforesaid first axes A1 are arranged orthogonally to the longitudinal axis A_{L}.

The slide valve 8 comprises two opposite longitudinal recesses 40 that, in the advanced position of the slide valve 8, place each nozzle orifice 6 of the polymer components in communication with a respective recirculating conduit 38 suitable for convey the flow to a collecting and storing tank for the respective polymer component.

The alternative movement of the slide valve 8 between the retracted position and the advanced position is controlled by piston 50 of a hydraulic actuator.

Each injecting device 1 comprises a hollow body 3 extending along the respective first axis A1 and having an annular conduit and one or more inlet orifices 4 into which a supply conduit 5 opens for a respective polymer component. In the hollow body 3 a supply chamber 55 of the nozzle and a nozzle orifice 6 suitable for communicating with the aforesaid mixing and guide conduit 7 is obtained.

Each injecting device 1 comprises a throttling and control element 9, particularly a pin-shaped element 9, housed and movable slidably in the respective hollow body 3. The pin-shaped element 9 is movable along the first axis A1 with respect to the nozzle opening 6 to close and open the latter in a controlled manner, as best described herein below. Particularly, a tip portion 10 of the pin-shaped element 9 acts to decrease or increase, according to the case, the narrow annular section of the nozzle 6, suitably varying a narrow active section thereof, i.e., the actual useful passage section for the polymer component.

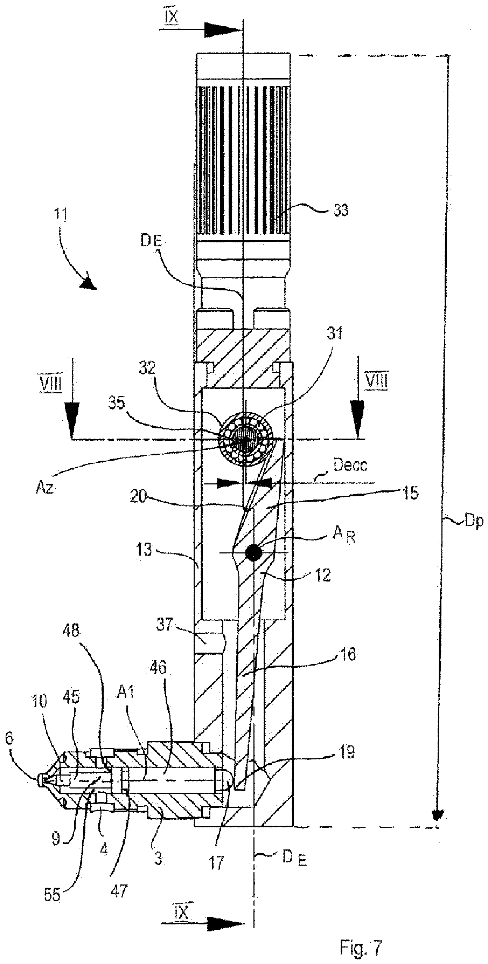

As best shown in Fig. 7, the pin-shaped element 9 comprises a thinner first portion 45 on which the tip portion 10 is obtained, and a thicker second portion 46 that is in contact with the internal surface of the hollow body 3 and into which a seat 47 is obtained, that can house a sealing gasket or that can act as a pressure distribution channel in the gap in the case that the gasket is not mounted. The conic drape of the tip portion 10 is different, particularly the same as or greater than, of the cone of the converging conduit defining the nozzle orifice 6. The injecting device 1, by virtue of such configuration, acts for varying the narrow annular section, adapting it to the flow rate passing through the nozzle, and this narrow section has the function of converting the pressure energy of the jet into speed and turbulence. The jet, hitting a further jet, of another polymer component, causes a so-called "high pressure" mixing of the two chemical components.

Between the thin first portion 45 of the pin-shaped element 9 and the hollow body 3 an interspace is defined, in which the polymer component penetrates and is received through the annular conduit and the inlet orifices 4. On the second portion 46 of the pin-shaped element 9 an annular surface 48 is provide, lying on a transversal plane, particularly, orthogonal to the first axis A1, and on which by the respective polymer component a pressure is exerted, generated by the supply chamber 55 of the nozzle that tends to move the pin-shaped element 9 away from the nozzle orifice 6, so as to open the latter.

It is suitable that such annular surface is large with respect to the nozzle hole, because in such a manner the friction perturbation effects and the dragging or Pitot forces of the fluid flow tending to move the pin to the narrow section are reduced.

Each injecting device 1 comprises an adjusting and contrasting unit 11 configured for exerting on the respective pin-shaped element 9 a thrust action suitable for balancing the force exerted by the pressure of the polymer component in a controlled manner. Each adjusting and contrasting unit 11 is independent from the slide valve 8, and is configured to act on the respective pin-shaped element 9 autonomously, both with respect to the slide valve 8 and with respect to the other adjusting and contrasting unit 11 coupled to the respective further pin-shaped element 9.

The adjusting and contrasting unit 11 is so configured as to extend with a prevalent dimension Dp in a main extension direction D_{E} that is parallel to the aforesaid longitudinal axis A_{L}. This involves a significant reduction of the overall dimensions of the mixing head 2 in a direction transverse to the longitudinal axis A_{L}. In other terms, there is a reduction of the overall transversal dimensions with respect to an approaching direction of the mixing head 2 to a mould or another support on which, or in which, the polymer mixture has to be dispensed, increasing the accessibility thereof, thus obtaining a mixing head 2 with a high versatility and generally facilitating the manufacturing processes. At the same time, by virtue of such arrangement and orientation of the adjusting and contrasting unit 11, it is possible to exploit at the best the spaces in a direction parallel to the aforesaid longitudinal axis AL, making a higher volume available in order to contain the components acting to adjust and contrast the pin-shaped elements 9, and particularly the elastic element volume, without aggravating the transversal overall dimensions of the mixing head 2.

In fact, it is necessary that the thrusting section of the pressure on the pin-shaped element 9 or pin 48 is at least 4 times higher than that of the narrow section, larger to both ensure a firm stability for the adjusting unit (otherwise, the pressure in the chamber 55 could vary due to the pitot effect that is associated to the speed of the fluid in the chamber 55), and to ensure that the ratio between the friction force along the sliding surface of the section 46 is sensibly less than the force generated by the pressure, so as to suitably reduce the hysteresis of the spring adjustment system.

In fact, in some versions of the injecting device 1, with reference to the Figs. 1 to 9, the adjusting and contrasting unit 11 comprises flexure spring means 12 that extend transversally to the first axis A1, and are rotatable around a rotation axis A_{R}, arranged transversally to the first axis A1. The flexure spring means 12 operate by ensuring that the force generated by the pressure in the chamber 55 is suitably opposed and yielding in a more or less marked manner according to the pressure variation of the resin, thus varying the narrow active section of the nozzle orifice 6.

Therefore, the flexure spring means 12, or by sake of exposition clarity, the spring 12, has to be preloaded to such a value as to contrast the force exerted by the pressure on the annular surface 48 of the pin-shaped element 9.

The energy E_{acc} built up by the flexure spring 12 is proportional to the force F and the square of the total elastic yielding of the spring "r" (Hook's law), while it is necessary that the elastic constant or rigidity K=(dF/dr) of the spring has the lowest value as possible.

Generally, in the springs the stress state is inversely proportional to the spring section or the square thereof, while the rigidity per length unit increases as the section or the square thereof increases. In view of the above, when dimensioning the flexure, torsion, or bellow, or cup spring or having another shape, it is therefore suitable to adopt the minimum section that ensures a stress state that avoids the fatigue failure and enlarge the spring or put different springs in series, until obtaining a sufficiently low rigidity.

This generally results in the need to ensure a volume of the elastic element sufficient to build up the energy necessary to the preload and the variation thereof, i.e., in considerable overall dimensions of the contrasting elastic element. Furthermore, there is the need to be able to adapt the elastic element section to the stress state along the extension thereof.

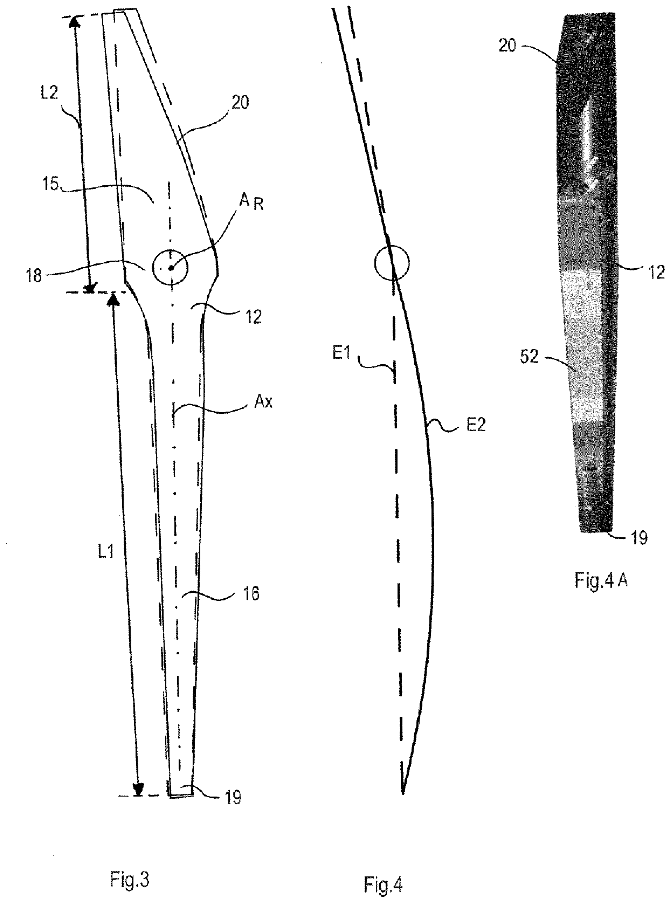

The adjusting and contrasting unit 11 further comprises a preload adjusting member 14 configured for adjusting an angular position of the flexure spring means 12 around the rotation axis A_{R} (best seen in Fig. 3) to modify the preload elastic force that from the flexure spring means 12 is exerted on the pin-shaped element 9 so as to balance the pressure action of the polymer component and thus control the nozzle orifice 6 opening.

A casing body 13 is provided, that extends substantially along the main extension direction D_{E} parallel to the longitudinal axis A_{L} and in which the flexure spring means 12 are housed. The particular arrangement of the casing body 13 allows, on one hand, considerably reducing the transversal overall dimensions of the head 2, and at the same time providing a volume increase in a direction parallel to the aforesaid longitudinal axis AL so as to be able to house flexure means 12 that are much extended longitudinally, provided with very low elastic constants and with a section variable as a function of the stress state, hence more yieldable and suitable for small pressure variations of the jet. This means that, with spring means provided with a low elastic constant or rigidity, it is possible to vary, with minor variations in pressure, the active section of the nozzle orifice 6; particularly, a low elastic constant of the spring allows obtaining, as the resin flow-rate varies, a larger variation in the nozzle active section in response to limited pressure variations. Therefore, there is a high sensitivity of the injector to the fluid-dynamic variations, hence a more accurate control of the injection parameters. In practice, a high repetitiveness of the mixing is achieved, carrying out an accurate and precise control of the pressure upstream of the injector in spite of possible transitory flow-rate variations due for example to the compressibility of the resins (the resin compressibility starts from a value of about 3% the volume per 100 bar, and it progressively decreases as the pressure increases) or to variations in the flow-rate set by the machine duty cycle or to abrupt variations in the nozzle section due to lumps transported by the fluid duct.

Furthermore, with the injectors of the prior art, in order to have low elastic constants, it would be necessary to adopt axial springs, e.g., coil springs, that are too long, or having too large a coil to be yieldable, thus very bulky, or springs with very reduced wire section that involve reliability and mechanical strength problems.

Similar overall dimensions and stress conditions problems to the ultimate strength would also be present with other types of springs, for example, cup, bellow, wave springs, and other shapes extending along the injector axis.

As it is evinced from what has been described, the mixing head 2 thus provides adjusting and contrasting units 11, each intended to a respective injector 1, thus having a higher versatility, and adapting to a number of desired use conditions. Unlike some devices of the prior art, described above, having an architecture quite constraining and a single drive shared by the injectors, the structural configuration according to the present invention instead allows, where desired, to drive an injecting device 1 with modes and times that are different from the other injector device(s) 1, for example, for varying in real time the mixing ratio of the separate components during an injection cycle.

As shown in the Figs. 1 to 5, the flexure spring means comprise a lamina flexure bar 12, transversally arranged with respect to the first axis A1.

The lamina flexure bar 12 comprises a preload-presetting portion 15 configured for interacting with the aforesaid adjusting member 14, and a thrusting elastic portion 16, shaped for applying a thrust to a rear end 17 of the pin-shaped element 9 opposite the tip portion 10. Particularly, an end 19 of the elastic portion 16 is intended to be in contact with the rear end 17 of the pin-shaped element 9.

Between the thrusting elastic portion 16 and the preload-presetting portion 15 a hinge zone 18 is provided, through which the lamina flexure bar 12 is rotatable around the rotation axis A_{R}.

The thrusting elastic portion 16 is suitably tapered progressively to the thrusting end 19 so as to give to the lamina flexure bar 12 the required flexural elasticity.

The preload-presetting portion 15 is dimensioned so as to have a high mechanical rigidity, it being intended to be rested and receive a counter-thrust by the adjusting and contrasting unit 11, while the mechanic elastic behaviour is assigned only to the elastic portion 16, which is instead intended to be in contact with the rear end 17 of the pin-shaped element 9 thus providing the latter with the balancing and compensating action of the possible pressure fluctuations of the polymer component.

With reference to Fig. 3, it shall be noticed that the injectors typically used have nozzles with a conic shape, converging to the outlet that has a small length with a cylindrical shape.

The rear part is usually cylindrical and slides inside a seat, also cylindrical.

The cone usually has a total angle of 60 degrees, but it can vary by -30 and +70 degrees.

The pin has a front profile coupling to the nozzle with the conical part (cone plus cylinder) that can be also a tip usually opens by 2° more than the cone of the nozzle, but that can have an opening angle of -15 +45 degrees with respect to the nozzle cone.

The nozzles have a diameter ranging from 0.1 to 8 mm. It is suitable that the cylindrical sliding surface has a section at least about 10 times larger than the nozzle outlet section in order to make the friction and sliding forces and the forces generated by the seal members negligible, even if the aforesaid surface may range from 1,4 to 30 times.

The flexure spring 12 comprises a portion with constant transversal section and a further portion having a variable section in a triangular or curvilinear shape.

Generally, the constant section is dimensioned to bear the shear stress, while the variable section with a triangular or curvilinear profile, in the longitudinal direction, is dimensioned so as to optimize the traction or compression stress originating from the flexural momentum. The overall section is dimensioned so that the composition of the stress state does not exceed the fatigue limits of the material used, which may be a metal, polymer, or composite material.

Fig. 4A shows the pattern of the stress state, calculated by the finite element method, in the flexure spring 12 according to an optimized configuration. In the more central zones, the stress state is higher than in the end zones.

With the number 52 the zone is indicated that is subjected to a stress state corresponding to the fatigue limit, the latter being dependent on the kind of material of which the flexure spring 12 is made.

In other terms, the thrusting elastic portion 16 has a length L1, a first width W1, measured parallel to the rotation axis A_{R} and a first thickness T1 that are selected suitably according to the specific needs of the case. Similarly, the same applies to the section of the elastic portion 16 that, near the hinge zone 18, will have a suitable first area value S1 and, at the thrusting end 19, will have a second area value S2 less than the first area value S1.

Similarly, the preload-presetting portion 15 has a second length L2 and other geometric parameters suitably selected according to predetermined requirements, which may vary according to the situations.

The preload presetting portion 15 is tapered from a zone near the rotation axis A_{R} to a further end near the adjusting member 14, and it comprises a contact and sliding surface 20 for the adjusting member 14, that is tilted with respect to a longitudinal axis Ax of the elastic portion 16 by a suitable angle.

With this configuration, the presetting section has a variable section that allows both optimizing the distribution of the stress originated by the flexing momentum, and a shape that allows implementing the preload presetting via an axial movement of the pusher member 21.

In the versions illustrated in Figs. 1, 1bis, 2, and 5, the adjusting member 14 comprises a pusher pin 21, that extends and is movable along the main extending direction D_{E}, and that comprises a resting and prepositioning end 22 for the lamina flexure bar 12. When the pusher pin 21 is axially moved, the resting and pre-positioning ends 22, that acts on, and is in contact with, the sliding contact surface 20, determines a rotation of the presetting portion 15 of the lamina flexure bar 12 in a direction or the other one, increasing or decreasing the elastic preload that the elastic portion 16 exerts onto the respective pin-shaped element 9.

In a first version, shown in Fig. 1, the pusher pin 21 is housed inside a hollow housing and guiding element 28 and comprises a screw portion 60. The screw portion 60 engages, via a threaded coupling 61, with a portion of the hollow housing and guiding element 28, allowing an adjustment of the position of the pusher pin 21 along the main extending direction D_{E}. Therefore, by acting on the screw portion 60, it is possible to adjust the preload of the lamina flexure bar 12.

In a second version, shown in Fig. 1bis, counteracting spring means 23 are included in the adjusting and contrasting unit 11, for example, a helicoidal compressing spring, suitable for acting on the pusher pin 21 so as to tend to move it away from the lamina flexure bar 12. A piston element 24 is coupled on the pin, movable in a chamber 25. The chamber 25 is suppliable with an operating fluid the pressure of which is controlled for axially adjusting the position of the pusher pin 21 and consequently the angular position of the lamina flexure bar 12 around the rotation axis A_{R}. More precisely, the chamber 25 is connectable, by the port 51, to an hydraulic circuit comprising a control unit that acts for varying and controlling the pressure of the operating fluid, such as an oil, when it is necessary to vary the position of the pusher pin 21 to increase or decrease the thrusting elastic preload force that the lamina flexure bar 12 exerts on the pin-shaped element 9.

The pusher pin 21 is slidable inside a housing body 26 axially aligned to and coupled with the casing body 13, thus extending along the main extension direction D_{E}, and inside which also the contrasting spring 23 is housed. The resting and pre-positioning end 22 thus protrudes automatically in an adjustable manner, inside the casing body 13 for cooperating with the preload-presetting portion 15 of the lamina flexure bar 12.

With reference to Fig. 2, the pusher pin 21 is provided with an enlarged portion 27, slidable inside a hollow guide element 28 coupling with the casing body 13 and on which the housing body 26 is mounted. The enlarged portion 27 is provided with seats 29 suitable for housing seal means.

In Fig. 1bis, the lamina flexure bar 12 is arranged in a first operative configuration, in which it is subjected to a loading action by the pusher pin 21.

As already explained, the pusher pin 21 simply preset and adjusts the preload condition of the flexure spring 12. By varying the position of the pusher pin 21 the preload is varied, so as to adjust the pressure upstream of the injector as the flow-rate varies.

The lamina flexure bar 12, being on one end subjected to the thrust of the pusher pin 21, and on the other end being rested to the rear end 17 of the pin-shaped element 9, is in a predetermined elastic deformation configuration, i.e., a flexural condition, affecting substantially the thrusting elastic portion 16 thereof.

In Fig. 2, another possible operative configuration is shown, in which the lamina flexure bar 12 is subjected to a greater load action by the pusher pin 21, which involves a preload elastic force on the pin-shaped element 9 that is higher with respect to the case in Fig. 1bis.

In such situation, the lamina flexure bar 12 is in a greater elastic deformation configuration compared to the case shown in Fig. 1bis.

Fig. 3 shows in a hatched line the lamina flexure bar 12 in the first operative configuration of Fig. 1bis and in a continuous line the lamina flexure bar in the second operative configuration, which is more stressed, shown in Fig. 2.

Fig. 4 shows schematically a first elastic deformation axis line E1, hatched, and a second elastic deformation axis line E2, continuous, of the lamina flexure bar 12 associated respectively to the first operative configuration and the second operative configuration. From a comparison between the two possible elastic deformation axis lines, the elastic behaviour of the lamina flexure bar 12 can be noticed. As it can be evinced, the elastic deformation phenomenon occurs substantially on the elastic portion 16, since the latter has a narrower geometry compared to the stumpier and more rigid preload presetting portion 15. This advantageously allows obtaining a more precise control and drive on the pin-shaped element 9.

In operation, whether in a recirculation condition (slide valve 8 in the advanced position) or in a mixing condition, once the slide valve 8 has been brought to the retracted position, as in Fig. 1 or 1bis, the pressure of the polymer components in the hollow bodies 3 of the respective injecting devices 1 determines the movement of the pin-shaped elements 9 away from the respective nozzle orifices 6 of the injectors, which, without a flow-rate, would be closed. Each pin-shaped element 9, subjected to the pressure of the polymer component, goes back, pushing onto the elastic portion 16 of the lamina flexure bar 12 that opposes a balancing elastic force thereto.

By suitably acting on the adjusting and contrasting unit 11, with an adequate pressure of the oil that from the hydraulic circuit reach the port 51 and contrasts the compressing spring 23, the right axial position of the pusher pin 21 is reached, and thus a proper angular position of the lamina flexure bar 12, which, in turn, exerts the desired balancing elastic force on the pin-shaped element 9. This ensures a proper and precise value of the supply pressure of the single components to the mixing head 2. The lamina flexure bar 12 is preventively preloaded according to a reference flow-rate/pressure value. Such elastic element is per se capable of adapting the injector opening position according to the variations in the flow-rate and the section variations of the narrow section caused, for example, by particles obstructing the nozzle 6 section. More precisely, upstream of the narrow section the thin wall outflow law applies Delta P= AsxQ x Q x Ro/2, based on which the pin-shaped element 9 retracts or advances as a function of the pressure variations upstream of the narrow section by virtue of the elasticity of the flexure spring 12. The less is the rigidity of the flexure spring 12, the less is the pressure variation determined by the flow-rate variation or a possible partial occlusion.

Furthermore, the automatic preload device of the flexure spring 12 works by decreasing or increasing the preload with respect to the initial preload value, according to the presence, respectively, of a decrease or increase of the resin flow-rate, and this corrects the pressure variation necessary to further spontaneously deflect the spring as described above. In other terms, the lamina flexure bar 12 is subjected to an elastic yielding, i.e., an elastic flexure, depending on how the flow-rate varies, and thus the opening pressure of the polymer component, or depends also on a possible accidental variation of the narrow section due to obstructive particles. Consequently, the position of the pin-shaped element 9 is varied, hence the opening narrow active section of the nozzle orifice 6. The less the spring rigidity is, the less the pressure variation necessary to move the pin is.

The spring preload condition is further automatically corrected to control the pressure to the optimal value and to compensate for the pressure variation that is necessary to increase or decrease the spring deflection.

From what has been described is apparent that it is convenient to provide the injector of a member that is per se as much yieldable as possible to the variations in pressure upstream of the narrow section, such member having to be preloaded to a flexure value that initially generates the contrasting force to the pressure generated by the reference flow rate.

In the Figs. da 6 a 9, another version of adjusting and contrasting unit 11 is shown. The adjusting and contrasting unit 11 comprises, inside a suitable casing body 13, a thrusting element 31 mounted on a drive shaft 30 that is rotatable around a drive axis Az orthogonal to the first axis A1 of the injecting device A1. The thrusting element 31 is configured to continuously push and reposition, adapting the preload condition, the elastic element 12 pushing the pin 9 so as to constantly balance the force generated by the pressure exerted by the polymer component by adjusting the narrow active section of the nozzle orifice 6 to the fluid flow rate, constantly adjusting the pressure exerted by the polymer component.

An electric motor 33 is provided, coupled to a mechanic reduction gear 34, for placing the drive shaft 30 in rotation.

Particularly, the thrusting element comprises a bearing element 31 mounted eccentrically on the drive shaft 30, and having an internal annular element and an external annular element 35 on which a thrusting surface 32 is obtained, suitable for coming into contact with the preload setting portion 15 of the lamina flexure bar 12. Spheres 49 or rolling rolls are interposed between the external annular element 35 and the internal annular element.

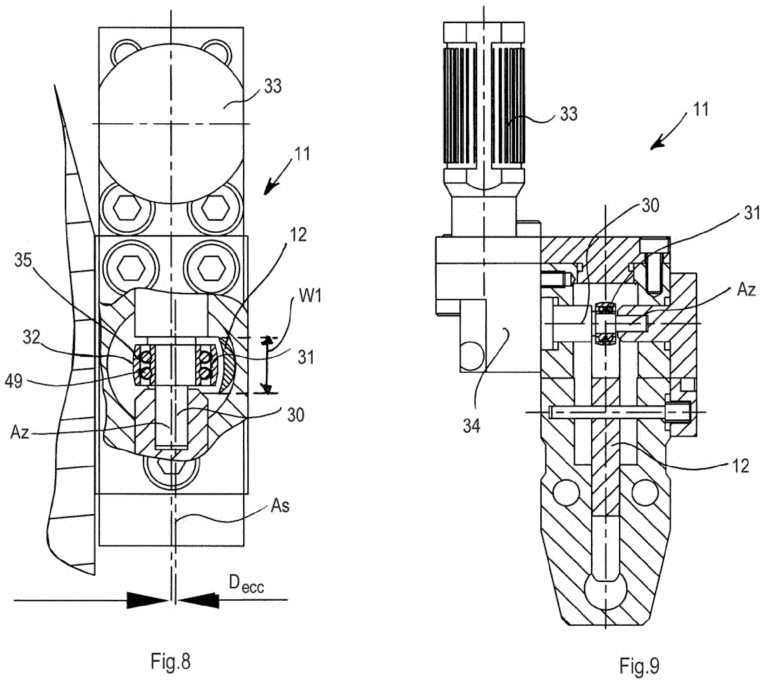

The mounting with eccentricity is best seen in Fig. 8; in fact, an eccentricity distance D_{ECC} can be seen between the drive axis A_{Z} and an axis As of the thrusting element 31, in this case, the bearing element 31. The eccentricity distance D_{ECC} may have a value up to the value of the nozzle diameter multiplied by 1.5.

The shaft drive 30, by rotating, brings peripheral zones of the thrusting element 31 to interact with the preload setting portion 15, which zones are more or less far from the drive axis Az, according to the angular position of the shaft drive 30. By controlling the angular position of the electric motor 33, for example, using a step-step motor 33, or directly controlling the angular position of the shaft drive 30, for example by an angular position transducer or encoder, it is possible to control the angular preloading position of the lamina flexure bar 12 and thus the elastic force that the latter exerts onto the respective pin-shaped element 9.

Alternatively to the bearing element, the thrusting element 31 may comprise other equivalent thrusting means, for example, a cam element keyed on the shaft drive 30.

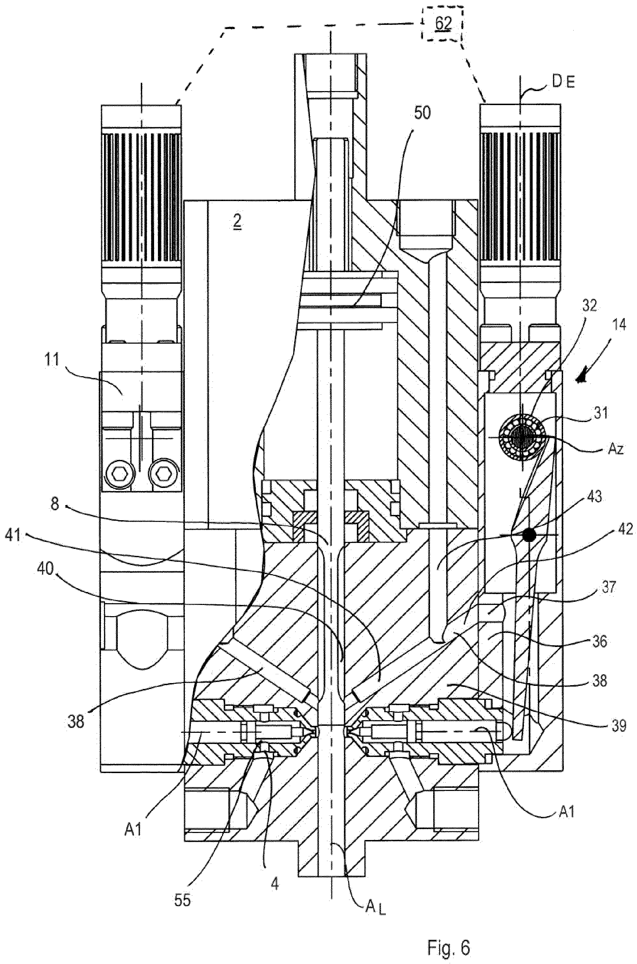

In the Figs. da 10 a 13 a further, simplified version is shown, of the injecting device 1, wherein the adjusting and contrasting unit 11 has differences with respect to the versions described above. In this version, similarly to the version of the Figs. 6 to 9 described above, a motor 33 is provided, which directly drives a shaft 30 contained in a suitable casing body 13, and extending parallel to the longitudinal axis A_{L}, on which shaft 30 a thrusting element 31 is mounted, similar to the version already described. In this version, the thrusting element 31 is oriented with its axis As parallel to the longitudinal axis A_{L}. The adjusting and contrasting unit 11 in this version lacks the flexure spring means 12 and the thrusting element 31 is directly in contact with the rear end 17 of the pin-shaped element 9. This version of adjusting and contrasting unit 11 is structurally simpler and has overall dimensions further reduced compared to the preceding versions.

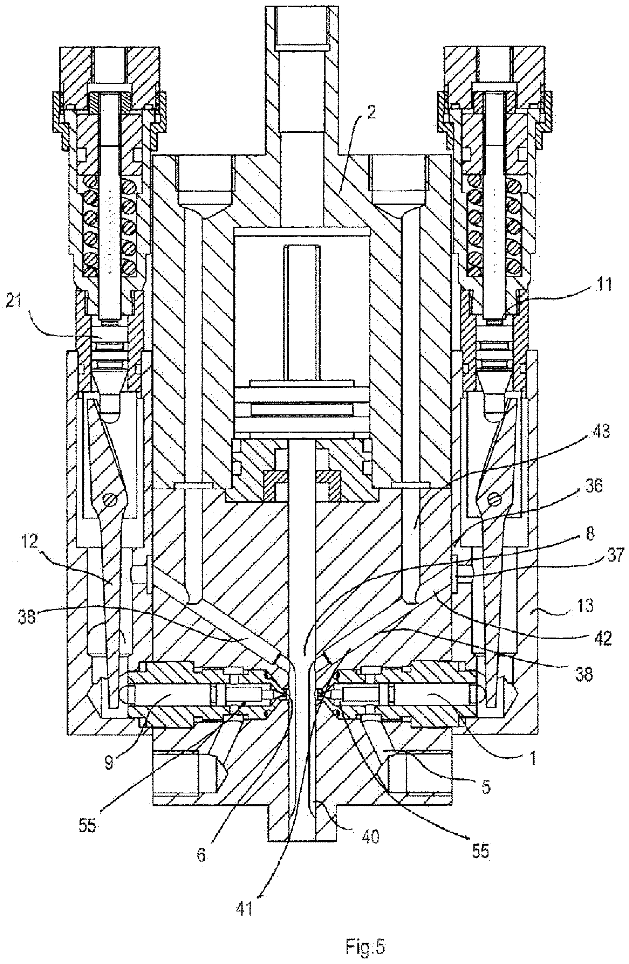

In all the versions described above, the respective casing body 13 comprises a wall 36 that is intended to be applied to the body 39 of the mixing head 2 and in which an opening is obtained 37, suitable for placing the internal cavity of the casing body 13 in fluid communication with one of the two recirculation channels 38, obtained in the body 39 of the mixing head 2. Owing to such configuration, the possible small amount of polymer component leaking between the hollow body 3 and the pin-shaped element 9 and penetrating into the cavity of the casing body 13 can be sent again towards the suitable storage tank to be reused. More precisely, as best seen in Fig. 5, the recirculating channel 38 comprises a first conduit branch 41, that opens on a respective longitudinal recess 40 of the slide valve 8, a second conduit branch 42, that opens on the aforesaid communication opening 37, and a third conduit branch 43 acting as a collector to collect the flows coming from the first conduit branch 41 and/or the second conduit branch 42 for conveying them to the aforesaid storage tank.

Owing to the structural configuration and the arrangement of the casing body 13 provided with the opening 37, connected to the recirculating channel 38, it is possible to easily drain the small amount of resin leaking from the sliding surfaces of the pin, avoiding to have to install seals along the sliding seat of the pin and thus avoiding the relative friction forces and the stick slip phenomenon that they cause. This further allows avoiding the presence of tubes for draining the resin leakage and, moreover, it is avoided that the resin, particularly the isocyanate or the epoxy hardener, crystallizes, creating a malfunctioning of the injector. Furthermore, the aforesaid configuration gives the possibility, where it is desired, to omit gaskets on the pin-shaped element 9.

The particular configuration and arrangement of the opening 37 and the second conduit branch 42 is advantageous, since it exploits the presence of the recirculating channel 38 to drain the resin, making the adoption of bothersome and bulky connections with draining tubes or the line superfluous.

Owing to this configuration according to the invention, it is possible the drainage to the recirculation conduits 42 and the recovery of the components, which allows avoiding the use of sliding seals on the pin and to have a simple gap keeping to the minimum the leakage to such recirculation and recovery conduits, hence minimizing, or even eliminate, the frictions that perturb the pin adaptation movement and introduce a hysteresis on the adjusted pressure.

It shall be noticed that, during the standard operation of the present mixing head 2, the switching from the "mixing and injection step", in which the mixture is dispensed inside a mould, to the "recirculation step", in which the mixing and dispensing is temporarily interrupted before filling another mould, it is suitably assigned to the slide valve 8 provided with longitudinal recesses 40. The openings 37 that place the casing bodies 13 in communication with the conduits 42, 43 act only to recover, making the minimum amounts of polymer components possibly leaking along the pin-shaped elements 9 and inside the casing bodies 13 to recirculate towards the storing tanks. Such configuration differs from some devices of the state of the art, as described above, in which the recirculation function is also assigned to the relative distribution valves; such known valves are therefore continuously subjected to a stress, with alternating movements to switch from the active mixing and dispensing step to the recirculation step, with consequent continuous transitory conditions that might affect the "repeatability" of the injection cycles.

Therefore, from what has been described and shown in the appended drawings, it is apparent that the invention is directed to an injecting device for a mixing head provided with an adjusting and contrasting unit that allows considerably reducing the overall dimensions, and that allows an easier and versatile dispensing of the polymer mixture into a mould or on another support, also in the presence of very reduced access spaces.

Owing to the invention a control system is provided, which is capable of generating a self-adaptive movement of the pin-shaped element of each injecting device that adapts a narrow nozzle section according to the variations in the flow-rate with a moderate variation of the upstream pressure.

The supply pressure of the polymer components is pre-set to values that provide experimentally of good mixing results. Once the setting for the operation has ended, the injecting devices according to the invention self-adapt, each autonomously, to possible variations in the flow-rate, and succeed in optimally converting the pressure energy into kinetic energy of the jets of the different polymer components, obtaining their mutual collision in a zone that is kept as much as possible at the centre of the mixing chamber 7. In other terms, the position of the pin-shaped elements 9, and thus the narrow opening section of the nozzles are continuously adjusted to maintain the pressure stage as much constant as possible even with a variation in the flow-rate, caused intentionally or caused by a disturbance on the supply line.

Owing to the adjusting and contrasting unit that has been described in the various versions thereof, a more regular, rapid and precise drive of the pin-shaped valves is obtained, through a constructively and functionally simple solution. Consequently, a constant control of the pressures, and an improved mixing of the two or more polymer components are ensured.

## Claims

1. Injecting device for feeding a polymer component in a mixing head (2) and for mixing it through turbulence with at least a second polymer component to produce foams and reactive polymer resins and moulded items, comprising:
- a hollow body (3) extending along a first axis (A1) and having a supply opening (4), into which a supply conduit (5) opens for the polymer component, and a nozzle orifice (6) shaped in such a manner as to face and communicate with a mixing and guide conduit (7) of said mixing head (2) that extends along a longitudinal axis (AL) that is arranged transversely with respect to said first axis (A1), said mixing and guide conduit (7) housing a slide valve (8) for the recirculation of the polymer components, that is slidable along said longitudinal axis (AL), between a retracted position of non-recirculation and dispensing of the jets into a mixing space, and an advanced position for the recirculation of the polymer components,
- said slide valve (8) being provided with longitudinal recesses (40) for placing in communication, in said advanced position, each nozzle orifice (6) with a respective recirculating conduit (38, 41, 42, 43) for conveying the respective polymer component to a collecting and storing tank,
- a pin-shaped throttling and control element (9), slidably housed in said hollow body (3), configured for varying a narrow active section of said nozzle orifice (6) for converting into kinetic energy of the jet the pressure energy of the respective polymer component, said throttling and control element (9) being movable with respect to said nozzle orifice (6) along said first axis (A1),
- said throttling and control element (9) being shaped for receiving from said polymer component delivered in said hollow body (3) a pressure tending to move a tip portion (10) of said throttling and control element (9) away from said nozzle orifice (6) thus varying said narrow active section thereof,
- an adjusting and contrasting unit (11) configured for exerting on said throttling and control element (9) a pre-load and thrust action suitable for setting up said element (9), preliminarily, in an initial positioning and/or preload condition that is such as to adjust said narrow active section to a reference flow-rate and pressure of said polymer component,
- said adjusting and contrasting unit (11) being so configured as to extend with a prevalent dimension (D_{P}) in a main extension direction (D_{E}) that is parallel to said longitudinal axis (AL), so as to reduce the overall dimensions of said mixing head (2) in a transverse direction to said longitudinal axis (AL) and occupy a volume that expands prevalently in said main extension direction (D_{E}),
**CHARACTERISED IN THAT**
said adjusting and contrasting unit (11) is configured to be able to continuously change, during an injection cycle, the position of said element (9) so as to adjust said narrow active section in response to possible variations in the flow-rate, intentional or caused by disturbances on the supply line, and to adjust the position and/or the contrasting force to balance and adjust the pressure exerted by said polymer component for maintaining the pressure stage constant, in spite of a possible variation in the flow-rate, and **in that** said adjusting and contrasting unit (11) is housed in a casing body (13) in fluid communication with said hollow body (3) and extending along said main direction (D_{E}) parallel to said longitudinal axis (A_{L}), wherein on a wall (36) of said casing body (13) an opening (37) is obtained suitable for placing the cavity of said casing body (13) in fluid communication with a recirculating channel (38, 41, 42, 43) obtained in said mixing head (2) so as to send to a suitable storage tank any quantity of polymer component that might leak from said hollow body (3) towards the interior of said casing body (13).

2. Injecting device according to claim 1, wherein said adjusting and contrasting unit (11) includes flexure spring means (12) extending transversely with respect to said first axis (A1) and rotatable around a rotation axis (A_{R}), said flexure spring means (12) being housed inside said casing body (13), wherein said casing body (13) extends along said main extension direction (D_{E}) so as to provide a volume increase available for housing said flexure spring means (12) and the relative preload elements parallel to said longitudinal axis (AL), avoiding to increase the side overall dimensions according to the direction of said first axis (A1).

3. Injecting device according to claim 1 or 2, wherein said recirculating channel (38) is obtained in a base body (39) of said mixing head (2) and comprises a first conduit branch (41), that opens on a respective longitudinal recess (40) of said slide valve (8), a second conduit branch (42), that opens on said fluid communication opening (37), and a third conduit branch (43) shaped for collecting and conveying the flows of polymer component from said first conduit branch (41) and said second conduit branch (42) to said storage tank.

4. Injecting device according to any one of claims 2 to 3, wherein said flexure spring means (12) is configured for varying, via elastic yielding, the position of said throttling and control element (9) to adjust said narrow active section of said nozzle orifice (6) to the flow rate of said polymer component and balance the pressure exerted by the polymer component.

5. Injecting device according to any one of claims 2 to 4, wherein said adjusting and contrasting unit (11) further comprises an adjusting member (14) configured for adjusting an angular position of said flexure spring means (12) around said rotation axis (A_{R}) to modify the elastic force exerted by said flexure spring means (12) on said pin-shaped throttling and control element (9) so as to balance said pressure action and control the position of said tip portion (10) and thus the opening of said nozzle orifice (6).

6. Injecting device according to any one of claims 2 to 5, wherein said flexure spring means (12) comprises a preload-presetting portion (15) configured for interacting with said adjusting member (14) and an elastic thrusting portion (16), shaped for applying a thrust to a rear end (17) of said pin-shaped element (9) opposite said tip portion (10), said rotation axis (A_{R}) being provided in a hinge zone (18) of said flexure spring means (12) interposed between said elastic thrusting portion (16) and said preload-presetting portion (15).

7. Injecting device according to claim 6, wherein said flexure spring means comprises a lamina flexure bar (12) that extends in a manner arranged transversally to said first axis (A1), said elastic thrusting portion (16) being tapered progressively to a thrusting end (19) of said lamina flexure element (12) opposite said adjusting member (14).

8. Injecting device according to claim 6 or 7, wherein said elastic thrusting portion (16) extends for a first length (L1) and has a first thickness (T1) that is progressively reduced passing from a first value near said rotation axis (A_{R}), to a second value comprised at the end thereof that is further from said rotation axis (A_{R}), the section of said elastic portion (16) having, at said further end, a respective value of area (S2) less than the value of area (S1) in a zone nearer said rotation axis (A_{R}), such configuration being such as to optimize the stress state in relation to the volume of said lamina flexure bar (12).

9. Injecting device according to any one of claims 6 to 8, wherein said preload-presetting portion (15) is tapered from a zone near said rotation axis (AR) to a further end near said adjusting member (14), has a second length (L2) less than said first length (L1), and comprises a contact and sliding surface (20) for said adjusting member (14) that is tilted with respect to a longitudinal axis (Ax) of said elastic portion (16) so as to define a ramp zone that, by an axial thrust action of said adjusting member (14) enables the preload to be actuated, said preload-presetting portion (15) having a section that varies in such a manner as to optimize the stress state and at the same time to obtain the aforesaid ramp zone.

10. Injecting device according to claim 5, wherein said adjusting member (14) includes a pusher pin (21), extending and movable along said main extending direction (DE), comprising a resting and prepositioning end (22) for said flexure spring means (12), said pusher pin (21) being housed inside a hollow housing and guiding element (28) and comprising an enlarged portion (27), slidable inside said hollow guiding and housing element (28), that is provided with seats (29) suitable for housing seal means.

11. Injecting device according to claim 10, wherein said pusher pin (21) comprises a screw portion (60), that engages, via a threaded coupling (61), with a portion of said hollow housing and guiding element (28), said screw portion (60) allowing an adjustment of the position of said pusher pin (21) along said main extending direction (D_{E}).

12. Injecting device according to claim 10, wherein said adjusting member (14) includes counteracting spring means (23) that are suitable for acting on said pusher pin (21) in a direction moving away from said flexure spring means (12), and piston means (24) connected to said pusher pin (21) and movable in a chamber (25) suppliable with a pressurised operating fluid to axially adjust the position of said pusher pin (21) and consequently the angular preloading position of said flexure spring means (12) around said rotation axis (A_{R}), wherein said chamber (25) is connectable to a hydraulic circuit comprising a control unit (62) for varying the pressure of said operating fluid in such a manner as to control the position of said pusher pin (21).

13. Injecting device according to claim 12, as claim 10 is appended to any one of claims 2 to 9, wherein said pusher pin (21) is slidable inside a housing body (26) axially coupled with said casing body (13) and extending along said main extension direction (D_{E}), said counteracting spring means (23) being housed in said housing body (26), wherein said resting and pre-positioning end (22) protrudes in an adjustable manner inside said casing body (13) to act on said flexure spring means (12).

14. Injecting device according to any one of claims 1 to 9, wherein said adjusting and contrasting unit (11) comprises a thrusting element (31) mounted on a drive shaft (30) that rotates around a drive axis (Az) that is orthogonal to said first axis (A1), said thrusting element (31) comprising a thrusting surface (32) having zones placed at different distances from said drive axis (Az) so as to exert on said pin-shaped element (9) an action that is variable as a function of the angular position of said drive shaft (30), there being further provided means for controlling the angular position of said drive shaft (30).

15. Injecting device according to claim 14, wherein said adjusting and contrasting unit (11) is configured for driving said thrusting element (31) to continuously push and reposition said pin-shaped throttling element (9) and so as to maintain the narrow active section of said nozzle orifice (6) adequate to the fluid flow rate by constantly balancing the pressure exerted by the polymer component.

16. Injecting device according to claim 14 or 15, wherein said adjusting and contrasting unit (11) comprises an electric motor (33) coupled to a mechanic reduction gear (34) for rotating said drive shaft (30), a control unit (62) operationally connected to said electric motor (33) being provided for driving in a controlled manner said thrusting element (31) and positioning said pin-shaped element (9) to adjust the narrow active section of said nozzle orifice (6) to the flow rate of said polymer component.

17. Injecting device according to any one of claims 14 to 16, wherein said thrusting element comprises a bearing element (31) mounted eccentrically on said drive shaft (30), and having an external annular element (35) on which said thrusting surface (32) is obtained.

18. Injecting device according to any one of claims 14 to 16, wherein said thrusting element comprises a cam portion keyed on said drive shaft (30).

19. Injecting device according to any one of claims 14 to 18, as appended to any one of the claims 6 to 9, wherein said thrusting element (31) is positioned to be in contact with said preload setting portion (15) of said flexure spring means (12).

20. Injecting device according to any one of claims 14 to 18, as appended to claim 1, wherein said thrusting element (31) is positioned for directly driving said pin-shaped element (9), said thrusting element (31) being shaped for coming into contact with, and exerting an abutting and thrusting action on a rear end (17) of said pin-shaped element (9).

21. Injecting device according to claim 20, wherein said drive shaft (30) is arranged so as to be rotatable around a drive axis (Az) that is parallel to said longitudinal axis (A_{L}).

22. Injecting device according to any one of the preceding claims, wherein said adjusting and contrasting unit (11) is independent from, and configured to act autonomously with respect to, said slide valve (8).

23. Apparatus comprising a head (2) for mixing at least two active polymer components and at least two injecting devices (1) according to any one of the preceding claims, each injecting device (1) being for a respective polymer component, said injecting devices (1) being distributed angularly uniformly around said longitudinal axis (A_{L}), wherein each adjusting and contrasting unit (11) is configured for driving the respective throttling and control element (9) autonomously and independently with respect to the adjusting and contrasting unit(s) (11) coupled to the other throttling and control element(s) (9).

24. Method of using an injection device according to any one of claims 1 to 22, for feeding a polymer component in a mixing head (2) and for mixing it through turbulence with at least a second polymer component to produce foams and reactive polymer resins and moulded items, comprising:
- feeding a polymer component, through a supply opening (4), inside a hollow body (3) extending along a first axis (A1) and having a nozzle orifice (6) shaped in such a manner as to face and communicate with a mixing and guide conduit (7) of said mixing head (2) that extends along a longitudinal axis (AL) that is arranged transversely with respect to said first axis (A1), said mixing and guide conduit (7) housing a slide valve (8), for the recirculation of the polymer component, that is slidable along said longitudinal axis (AL) between a retracted position of non-recirculation and dispensing of the jets into a mixing space, and an advanced position for the recirculation of the polymer components, said slide valve (8) acting, via longitudinal recesses (40) with which it is provided, for placing, in said advanced position, each nozzle orifice (6) in communication with a respective recirculating conduit (38, 41, 42, 43) for conveying the respective polymer component to a collecting and storing tank,
- moving with respect to said nozzle orifice (6) and along said first axis (A1) a pin-shaped throttling and control element (9) slidably housed in said hollow body (3) so as to vary a narrow active section of said nozzle orifice (6) for converting into kinetic energy of the jet the pressure energy of the respective polymer component,
- configuring said throttling and control element (9) for receiving from said polymer component delivered in said hollow body (3) a pressure tending to move a tip portion (10) of said throttling and control element (9) away from said nozzle orifice (6), thus varying said narrow active section thereof,
- exerting on said throttling and control element (9), by an adjusting and contrasting unit (11), a pre-load and thrust action suitable for setting up said element (9), preliminarily, in an initial positioning and/or preload condition that is such as to adjust said narrow active section to a reference flow-rate and pressure of said polymer component
- and successively varying continuously the position of said element (9) for adjusting said narrow active section according to the variation in the flow-rate and adjusting the position and/or the contrasting force to balance and adjust the pressure exerted by said polymer component,
- configuring said adjusting and contrasting unit (11) so that said adjusting and contrasting unit (11) extends with a prevalent dimension (D_{P}) in a main extension direction (D_{E}) that is parallel to said longitudinal axis (AL), so as to reduce the overall dimensions of said mixing head (2) in a transverse direction to said longitudinal axis (AL) and occupy a volume that expands prevalently in said main extension direction (D_{E}),
- housing said adjusting and contrasting unit (11) in a casing body (13) in fluid communication with said hollow body (3) and extending along said main direction (D_{E}) parallel to said longitudinal axis (A_{L}),
**CHARACTERISED IN THAT** there is provided, through said adjusting and contrasting unit (11), continuously varying, during an injection cycle, the position of said element (9) so as to adjust said narrow active section in response to a variation in the flow-rate, intentional or caused by disturbances on the supply line, and to adjust the position and/or the contrasting force to balance and adjust the pressure exerted by said polymer component for maintaining the pressure stage constant, in spite of a possible variation in the flow-rate,
and **in that** the cavity of said casing body (13) is placed in fluid communication with a recirculating channel (38, 41, 42, 43) obtained in said mixing head (2) through an opening (37) obtained on a wall (36) of said casing body (13) so as to send to a suitable storage tank any quantity of polymer component that, leaking between said throttling and control element (9) and said hollow body (3), reaches said casing body (13).

25. Method according to claim 24, wherein it is provided to exert on said throttling and control element (9) a thrust and pre-load action by flexure spring means (12) included in said adjusting and contrasting unit (11), that act for adapting the preload both in response to the varying of the flow rate of the polymer component and in the case of accidental variations of said narrow active section caused by obstructive particles, said flexure spring means (12) extending transversely to said first axis (A1), being rotatable around a rotation axis (A_{R}), and being housed inside a casing body (13) that extends along said main extension direction (D_{E}) so as to provide a volume increase available for housing of said flexure spring means (12) parallel to said longitudinal axis (AL).

## Patentansprüche

1. Injektionsvorrichtung zum Einspeisen einer Polymerkomponente in einen Mischkopf (2) und Mischen dieser durch Turbulenz mit zumindest einer zweiten Polymerkomponente, um Schäume und reaktive Polymerharze und Formteile herzustellen, umfassend:
- einen Hohlkörper (3), welcher sich entlang einer ersten Achse (A1) erstreckt und eine Zuführöffnung (4) aufweist, in welche eine Zuführleitung (5) sich für die Polymerkomponente öffnet, und eine Düsenöffnung (6), welche in einer solchen Weise geformt ist, um einer Misch- und Führungsleitung (7) des Mischkopfes (2) gegenüberzuliegen und mit ihr zu kommunizieren, welche sich entlang einer Längsachse (AL) erstreckt, die quer in Bezug auf die erste Achse (A1) angeordnet ist, wobei die Misch- und Führungsleitung (7) ein Gleitventil (8) zum Rückzirkulieren der Polymerkomponenten aufnimmt, die entlang der Längsachse (AL) gleiten kann, zwischen einer zurückgezogenen Position des Nicht-Rückzirkulierens und des Verteilens der Strahlen in einen Mischraum, und einer vorgerückten Position des Rückzirkulierens der Polymerkomponenten,
- das Gleitventil (8), welches mit Längsvertiefungen (40) versehen ist, zum in Kommunikation Setzen, in der vorgerückten Position, jeder Düsenöffnung (6) mit einer jeweiligen Rückzirkulationsleitung (38, 41, 42, 43) zum Fördern der jeweiligen Polymerkomponenten zu einem Sammel- und Speichertank,
- ein stabförmiges Drossel- und Steuerelement (9), welches gleitend in dem Hohlkörper (3) aufgenommen ist, ausgestaltet zum Verändern eines engen aktiven Abschnitts der Düsenöffnung (6) zum Umwandeln der Druckenergie der jeweiligen Polymerkomponente in kinetische Energie des Strahls, wobei das Drossel- und Steuerelement (9) in Bezug auf die Düsenöffnung (6) entlang der ersten Achse (A1) bewegbar ist,
- das Drossel- und Steuerelement (9), welches zum Aufnehmen, von der in den Hohlkörper (3) gelieferten Polymerkomponente, eines Druckes geformt ist, der dazu neigt, einen Spitzenabschnitt (10) des Drossel- und Steuerelements (9) weg von der Düsenöffnung (6) zu bewegen, wodurch dessen enger aktiver Abschnitt verändert wird,
- eine Einstell- und Kontrastierungseinheit (11), ausgestaltet zum Ausüben einer Vorspann- und Schubeinwirkung auf das Drossel- und Steuerelement (9), geeignet zum Einrichten des Elements (9), vorzugsweise in eine Initialpositionierung und/oder Vorspannbedingung, die so ist, um den engen aktiven Abschnitt an eine Referenzdurchflussrate und den Druck der Polymerkomponente einzustellen,
- die Einstell- und Kontrastierungseinheit (11), welche so ausgelegt ist, um sich mit einer verbreiteten Dimension (D_{P}) in einer Haupterstreckungsrichtung (D_{E}) so zu erstrecken, dass sie parallel zu der Längsachse (AL) ist, um die Gesamtdimensionen des Mischkopfes (2) in einer Querrichtung zu der Längsrichtung (AL) zu reduzieren und ein Volumen einzunehmen, das sich vorwiegend in der Hauptausbreitungsrichtung (D_{E}) ausbreitet,
**dadurch gekennzeichnet, dass**
die Einstell- und Kontrastierungseinheit (11) ausgestaltet ist, um fähig zu sein, sich kontinuierlich, während eines Einspritzzyklus, die Position des Elements (9) so zu ändern, um den engen aktiven Abschnitt als Antwort auf mögliche Veränderungen in der Durchflussrate, absichtlich oder verursacht durch Störungen in der Zuführleitung, einzustellen, und die Position und/oder die Kontrastierungskraft einzustellen, um den durch die Polymerkomponente ausgeübten Druck auszugleichen und einzustellen, um die Druckstufe konstant zu halten, trotz einer möglichen Veränderung der Durchflussrate, und dadurch, dass die Einstell- und Kontrastierungseinheit (11) in einem Gehäusekörper (13) in Fluidkommunikation mit dem Hohlkörper (3) aufgenommen ist und sich entlang der Hauptrichtung (D_{E}) parallel zu der Längsachse (A_{L}) erstreckt, wobei auf einer Wand (36) des Gehäusekörpers (13) eine Öffnung (37) erhalten wird, geeignet zum Platzieren des Hohlraums des Gehäusekörpers (13) in Fluidkommunikation mit einem Rückzirkulationskanal (38, 41, 42, 43), der in dem Mischkopf (2) erhalten wird, um so jede Menge von Polymerkomponente zu einem geeigneten Speichertank zu senden, die vom Hohlkörper (3) zu einem Inneren des Gehäusekörpers (13) auslaufen kann.

2. Einspritzvorrichtung nach Anspruch 1, wobei die Einstell- und Kontrastierungseinheit (11) ein Biegefedermittel (12) enthält, das sich quer in Bezug auf die erste Achse (A1) und drehbar um eine Drehachse (A_{R}) erstreckt, wobei das Biegefedermittel (12) innerhalb des Gehäusekörpers (13) aufgenommen ist, wobei der Gehäusekörper (13) sich entlang der Haupterstreckungsrichtung (D_{E}) erstreckt, um so eine Volumenvergrößerung bereitzustellen, welche zum Aufnehmen des Biegefedermittels (12) und das relativen Vorspannelements parallel zu der Längsachse (AL) verfügbar ist, welches vermeidet, dass die Gesamtseitendimensionen gemäß der Richtung der ersten Achse (A1) erhöht werden.

3. Einspritzvorrichtung nach Anspruch 1 oder 2, wobei der Rückzirkulationskanal (38) in einem Basiskörper (39) des Mixkopfes (2) erhalten ist und einen ersten Leitungsarm (41), der sich auf einer jeweiligen Längsvertiefung (40) des Gleitventils öffnet (8), einen zweiten Leitungsarm (42), der sich auf der Fluidkommunikationsöffnung (37) öffnet, und einen dritten Leitungsarm (43) umfasst, der zum Sammeln und Fördern der Flusses von Polymerkomponenten aus dem ersten Leitungsarm (41) und dem zweiten Leitungsarm (42) zu dem Lagertank geformt ist.

4. Einspritzvorrichtung nach einem der Ansprüche 2 oder 3, wobei das Biegefedermittel (12) ausgestaltet ist, zum Verändern über elastisches Nachgeben, der Position des Drossel- und Steuerelements (9) zum Einstellen des engen aktiven Abschnitts der Düsenöffnung (6) auf die Durchflussrate der Polymerkomponente und Ausgleichen des durch die Polymerkomponente ausgeübten Drucks.

5. Einspritzvorrichtung nach einem der Ansprüche 2 bis 4, wobei die Einstell- und Kontrastierungseinheit (11) weiterhin ein Einstellelement (14) umfasst, ausgestaltet zum Einstellen einer Winkelposition des Biegefedermittels (12) um die Drehachse (A_{R}), um die durch das Biegefedermittel (12) auf das stabförmige Drossel- und Steuerelement (9) ausgeübte elastische Kraft so zu modifizieren, um die Druckwirkung auszugleichen und die Position des Spitzenabschnitts (10) und damit die Öffnung der Düsenöffnung (6) zu steuern.

6. Einspritzvorrichtung nach einem der Ansprüche 2 bis 5, wobei das Biegefedermittel (12) einen Vorspannungsvorgabeteil (15) umfasst, ausgestaltet zum Wechselwirken mit dem Einstellelement (14) und ein elastisches Schubteil (16), welches geformt ist, um einen Schub auf ein hinteres Ende (17) des stabförmigen Elements (9) gegenüber dem Spitzenabschnitt (10) aufzubringen, wobei die Drehachse (A_{R}) in einer Gelenkzone (18) des Biegefedermittels (12) vorgesehen ist, welche zwischen dem elastischen Schubteil (16) und dem Vorspannungsvorgabeteil (15) dazwischen gestellt ist.

7. Einspritzvorrichtung nach Anspruch 6, wobei das Biegefedermittel einen Kupplungslamellenbiegebalken (12) umfasst, der sich in einer quer zur ersten Achse (A1) angeordneten Weise erstreckt, wobei das Schubteil (16) sich zu einem Schubende (19) des Kupplungslamellenbiegebalkens (12) gegenüber des Einstellelements (14) fortlaufend verjüngt.

8. Einspritzvorrichtung nach Anspruch 6 oder 7, wobei das elastische Schubteil (16) sich eine erste Länge (L1) erstreckt und eine erste Dicke (T1) aufweist, die sich fortlaufend ausgehend von einem ersten Wert nahe der Drehachse (A_{R}) zu einem zweiten Wert reduziert, der an dessen Ende enthalten ist, das weiter von der Drehachse (A_{R}) entfernt ist, wobei der Bereich des elastischen Teils (16), an dem weiteren Ende, einen jeweiligen Flächenwert (S2) kleiner als der Flächenwert (S1) in einer Zone näher zur Drehachse (A_{R}) aufweist, so dass die Konfiguration so ist, um den Spannungszustand in Beziehung zu dem Volumen des Kupplungslamellenbiegebalkens (12) zu optimieren.

9. Einspritzvorrichtung nach einem der Ansprüche 6 bis 8, wobei das Vorspannungsvorgabeteil (15) sich von eine Zone nahe der Drehachse (AR) zu einem weiteren Ende nahe des Einstellelements (14) verjüngt, eine zweite Länge (L2) kleiner als die erste Länge (L1) aufweist, und eine Kontakt- und Gleitoberfläche (20) für das Einstellelement (14) umfasst, die in Bezug auf eine Längsachse (Ax) des elastischen Teils (16) gekippt ist, um so eine geneigte Zone zu definieren, die , durch eine axiale Schubeinwirkung des Einstellelement (14), der Vorspannung erlaubt bewirkt zu werden, wobei das Vorspannungsvorgabeteil (15) eine Abschnitt aufweist, der sich in einer solchen Weise verändert, um einen Spannungszustand zu optimieren und zur selben Zeit die vorgenannte geneigte Zone zu erhalten.

10. Einspritzvorrichtung nach Anspruch 5, wobei das Einstellelement (14) einen Druckstab (21) enthält, der sich entlang der Haupterstreckungsrichtung (DE) erstreckt und bewegbar ist, umfassend ein Ruhe- und Vorpositionierungsende (22) für das Biegefedermittel (12), wobei der Druckstab (21) innerhalb eines hohlen Gehäuse- und Führungselements (28) aufgenommen ist und ein vergrößertes Teil (27) umfasst, das innerhalb des hohlen Gehäuse- und Führungselements (28) gleiten kann, das mit Sitzen (29) versehen ist, die als Gehäusedichtmittel geeignet sind.

11. Einspritzvorrichtung nach Anspruch 10, wobei der Druckstab (21) einen Schraubenabschnitt (60) umfasst, der über eine Gewindekupplung (61), mit einem Teil des hohlen Gehäuse- und Führungselements (28) eingreift, wobei der Schraubenabschnitt (60) eine Einstellung der Position des Druckstabs (21) entlang der Haupterstreckungsrichtung (D_{E}) erlaubt.

12. Einspritzvorrichtung nach Anspruch 10, wobei das Einstellelement (14) ein Gegenfedermittel (23) enthält, das geeignet ist, auf den Druckstab (21) in eine Richtung, die sich von dem Biegefedermittel (12) weg bewegt, und ein Zylindermittel (24) einzuwirken, der mit dem Druckstab (21) verbunden ist und in eine Kammer (25) bewegbar ist, der ein mit Druck beaufschlagtes Betriebsfluid zugeführt werden kann, um die Position des Druckstabs (21) und daraus folgend eine Winkelvorspannungsposition des Biegefedermittels (12) um die Drehachse (A_{R}) einzustellen, wobei die Kammer (25) mit einem Hydraulikkreis verbindbar ist, der eine Steuereinheit (62) zum Verändern des Drucks des Betriebsfluids in einer solchen Weise umfasst, um die Position des Druckstabs (21) zu steuern.

13. Einspritzvorrichtung nach Anspruch 12, wie Anspruch 10 an irgendeinen von Anspruch 2 bis 9 angehängt ist, wobei der Druckstab (21) innerhalb eines Gehäusekörpers (26) gleiten kann, axial mit dem Gehäusekörper (13) gekoppelt istund sich entlang der Haupterstreckungsrichtung (D_{E}) erstreckt, wobei das entgegenwirkende Federmittel (23) in dem Gehäusekörper (26) aufgenommen ist, wobei das Ruhe- und Vorpositionierungsende (22) in einer einsteckbaren Weise innerhalb des Gehäusekörpers (13) aufgenommen ist, um auf das Biegefedermittel (12) zu wirken.

14. Einspritzvorrichtung nach einem der Ansprüche 1 bis 9, wobei die Einstell- und Kontrastierungseinheit (11) ein Schubelement (31) umfasst, das auf eine Antriebswelle (30) montiert ist, die um eine Antriebsachse (Az), die senkrecht zu der ersten Achse (A1) ist, sich dreht, wobei das Schubelement (31) eine Schuboberfläche (32) umfasst, die in verschiedenen Abständen zur Antriebsachse (Az) angeordnete Zonen aufweist, um so auf das stabförmige Element (9) eine Einwirkung auszuüben, die veränderbar als Funktion der Winkelposition der Antriebswelle (30) ist, wodurch weitere Mittel zum Steuern der Winkelposition der Antriebswelle (30) vorgesehen sind.

15. Einspritzvorrichtung nach Anspruch 14, wobei die Einstell- und Kontrastierungseinheit (11) ausgelegt ist, um das Schubelement (31) anzutreiben, um kontinuierlich das stabförmige Drosselelement (9) zu drücken und zurückzustellen, und um so den engen aktiven Abschnitt der Düsenöffnung (6) adäquat zu der Fluiddurchflussrate zu halten, durch konstantes Ausgleichen des durch die Polymerkomponente ausgeübten Drucks.

16. Einspritzvorrichtung nach Anspruch 14 oder 15, wobei die Einstell- und Kontrastierungseinheit (11) einen Elektromotor (33) umfasst, der mit einem mechanischen Untersetzungsgetriebe (34) zum Drehen des Antriebschafts (30) gekoppelt ist, eine Steuereinheit (62), die mit der Elektromotor (33) wirkverbunden ist, welche vorgesehen ist, um in einer kontrollierten Weise das Schubelement (31) anzutreiben, und das stabförmige Element (9) zu positionieren, um den engen aktiven Abschnitt der Düsenöffnung (6) auf die Durchflussrate der Polymerkomponente einzustellen.

17. Einspritzvorrichtung nach einem der Ansprüche 14 bis 16, wobei das Schubelement ein exzentrisch auf der Antriebswelle (30) montiertes Lagerelement (31) umfasst, und ein externes Ringelement (35) aufweist, auf welchem die Schuboberfläche (32) erhalten wird.

18. Einspritzvorrichtung nach einem der Ansprüche 14 bis 16, wobei das Schubelement einen auf der Antriebswelle (30) verzahnten Nockenabschnitt umfasst.

19. Einspritzvorrichtung nach einem der Ansprüche 14 bis 18, wie an einem der Ansprüche 6 bis 9 angehängt, wobei das Schubelement (31) positioniert ist, um in Kontakt mit dem Vorspannungsvorgabeteil (15) des Biegefedermittels (12) zu sein.

20. Einspritzvorrichtung nach einem der Ansprüche 14 bis 18, wie an Anspruch 1 angehängt, wobei das Schubelement (31) so positioniert ist, um direkt das stabförmige Element (9) anzutreiben, wobei das Schubelement (31) ausgeformt ist, um in Kontakt mit einem hinteren Ende (17) des stabförmigen Elements (9) zu kommen und eine Anstoß- und Schubeinwirkung darauf auszuüben.

21. Einspritzvorrichtung nach Anspruch 20, wobei die Antriebswelle (30) so angeordnet ist, um drehbar um eine Antriebsachse (Az) zu sein, die parallel zu der Längsachse (A_{L}) ist.

22. Einspritzvorrichtung nach einem der vorhergehenden Ansprüche, wobei die Einstell- und Kontrastierungseinheit (11) unabhängig von dem Gleitventil (8) ist und ausgestaltet ist, autonom in Bezug auf diese zu wirken.

23. Apparat, umfassend einen Kopf (2) zum Mischen von zumindest zwei aktiven Polymerkomponenten und zumindest zwei Einspritzvorrichtungen (1) gemäß irgendeinem der vorhergehenden Ansprüche, wobei jede der Einspritzvorrichtungen (1) für eine jeweilige Polymerkomponente ist, wobei die Einspritzvorrichtungen (1) winkelmäßig gleichmäßig um die Längsachse (A_{L}) verteilt sind, wobei jede Einstell- und Kontrastierungseinheit (11) ausgelegt ist, um das jeweilige Drossel- und Steuerelement (9) autonom anzutreiben, und unabhängig in Bezug auf die Einstell- und Kontrastierungseinheit(en) (11), welche zu der/m anderen Drossel- und Steuerelement(en) (9) gekoppelt ist.

24. Verfahren zum Verwenden einer Einspritzvorrichtung nach irgendeinem der Ansprüche 1 bis 22, zum Einspeisen einer Polymerkomponente in einen Mischkopf (2) und zum Mischen dieser durch Turbulenz mit zumindest einer zweiten Polymerkomponente, um Schäume und reaktive Polymerharze und geformte Teile herzustellen, umfassend:
- Einspeisen einer Polymerkomponente, durch eine Zuführöffnung (4), innerhalb eines Hohlkörpers (3), welche sich entlang einer ersten Achse (A1) erstreckt, und eine erste Düsenöffnung (6) aufweist, die in einer solchen Weise geformt ist, um einer Misch- und Führungsleitung (7) des Mischkopfes (2) gegenüberzuliegen und mit ihr kommunizieren, die sich entlang einer Längsachse (AL) erstreckt, die quer in Bezug auf die erste Achse (A1) angeordnet ist, wobei die Misch- und Führungsleitung (7) ein Gleitventil (8) aufnimmt, zum Rückzirkulieren der Polymerkomponente, das entlang der Längsachse (AL) zwischen einer zurückgezogenen Position der Nicht-Rückzirkulation und Ausgeben der Strahlen in einen Mischraum, und einer vorgerückten Position für die Rückzirkulation der Polymerkomponenten gleiten kann, wobei das Gleitventil (8) über Längsvertiefungen (40), mit denen es versehen ist, zum in Kommunikation Setzen, in einer vorgerückten Position, jeder Düsenöffnung (6) mit einer jeweiligen Rückführleitung (38, 41, 42, 43) wirkt, um die jeweilige Polymerkomponente zu einem Sammeln- und Speichertank zu fördern,
- Bewegen in Bezug auf die Düsenöffnung (6) und entlang der ersten Achse (A1) eines stabförmigen Drossel- und Steuerelements (9), welches gleitend in dem Hohlkörper (3) aufgenommen ist, um so einen engen aktiven Abschnitt der Düsenöffnung (6) zu verändern, die Druckenergie der jeweiligen Polymerkomponente in kinetische Energie des Strahls umzuwandeln,
- Konfigurieren des Drossel- und Steuerelements (9) zum Empfangen von der in den Hohlkörper (3) gelieferten Polymerkomponente eines Drucks, der dazu neigt, einen Spitzenabschnitt (10) des Drossel- und Steuerelements (9) weg von der Düsenöffnung (6) zu bewegen, wodurch dessen enger aktiver Abschnitt verändert wird,
- Ausüben auf das Drossel- und Steuerelement (9), durch eine Einstell- und Kontrastierungseinheit (11), einer Vorspannungs- und Schubeinwirkung, geeignet zum Einrichten des Elements (9), vorläufig, in eine Initialpositionierung und/oder eine Vorspannungsbedingung, die so ist, um den engen aktiven Abschnitt auf eine Referenzdurchflussrate und einen Druck der Polymerkomponenten einzustellen
- und nacheinander kontinuierliches Verändern der Position des Elements (9) zum Einstellen des engen, aktiven Abschnitts gemäß der Veränderung in der Durchflussrate und Einstellen der Position und/oder der Kontrastierungskraft, um den durch die Polymerkomponente ausgeübten Druck auszugleichen und einzustellen,
- Konfigurieren der Einstell- und Kontrastierungseinheit (11), so dass die Einstell- und Kontrastierungseinheit (11) mit einer verbreiterten Dimension (D_{P}) sich in einer Haupterstreckungsrichtung (D_{E}) erstreckt, die parallel zu der Längsachse (AL) ist, um so die Gesamtdimension des Mischkopfes (2) in einer Querrichtung zu der Längsachse (AL) zu reduzieren und ein Volumen einzunehmen, das sich vorwiegend in der Haupterstreckungsrichtung (D_{E}) ausbreitet,
- Aufnehmen der Einstell- und Kontrastierungseinheit (11) in einem Gehäusekörper (13) in Fluidkommunikation mit dem Hohlkörper (3) und Erstrecken in der Hauptrichtung (D_{E}) parallel zu der Längsachse (A_{L}),
**dadurch gekennzeichnet, dass** vorgesehen ist, durch die Einstell- und Kontrastierungseinheit (11), kontinuierliches Verändern, während eines Einspritzzyklus, der Position des Elements (9), um so den engen aktiven Abschnitt als Antwort auf eine Veränderung der Durchflussrate, absichtlich oder verursacht durch Störung in der Zuleitung einzustellen, und um die Position und/oder die Kontrastierungskraft einzustellen, um den durch die Polymerkomponenten ausgeübten Druck auszugleichen und einzustellen, um die Druckstufe konstant zu halten, trotz möglicher Veränderungen der Durchflussrate,
und dadurch, dass der Hohlraum des Gehäusekörpers (13) in Fluidkommunikation mit der Rückzirkulationskanals (38, 41, 42, 43) platziert wird, welcher in dem Mischkopf (2) durch eine Öffnung (37) erhalten wird, welche auf einer Wand (36) des Gehäusekörpers (13) erhalten wird, um so zu einem geeigneten Speichertank jede Menge einer Polymerkomponente zu senden, die, welche zwischen dem Drossel- und Steuerelement (9) und dem Hohlkörper (3) ausleckt, den Gehäusekörper (13) erreicht.

25. Verfahren nach Anspruch 24, wobei es vorgesehen ist, auf das Drossel- und Steuerelement (9) eine Schub- und Vorspannungseinwirkung durch das Biegefedermittel (12) auszuüben, welche in dem Einstell- und Kontrastierungselement (11) enthalten ist, das zum Einstellen der Vorspannung beiden wirkt, in Antwort auf das Verändern der Durchflussrate der Polymerkomponente und in dem Fall zufälliger Veränderungen des engen aktiven Abschnitts, verursacht durch hinderliche Partikel, wobei das Biegefedermittel (12) sich quer zur ersten Achse (A1) erstreckt, drehbar um eine Drehachse (A_{R}) ist, und innerhalb eines Gehäusekörpers (13) aufgenommen ist, der sich entlang einer Haupterstreckungsrichtung (D_{E}) erstreckt, um so eine Volumenvergrößerung vorzusehen, verfügbar zum Aufnehmen des Biegefedermittels (12) parallel zu der Längsachse (AL).

## Revendications

1. Dispositif d'injection pour introduire un composant polymère dans une tête de mélange (2) et pour le mélanger par turbulence à au moins un deuxième composant polymère pour produire des mousses et des résines polymères réactives et des pièces moulées, comprenant :
- un corps creux (3) s'étendant le long d'un premier axe (A1) et ayant une ouverture d'alimentation (4), dans laquelle un conduit d'alimentation (5) s'ouvre pour le composant polymère, et un orifice de buse (6) formé de manière à faire face à un conduit de mélange et de guidage (7) de ladite tête de mélange (2) qui s'étend le long d'un axe longitudinal (AL) qui est agencé transversalement par rapport audit premier axe (A1) et communiquer avec celui-ci, ledit conduit de mélange et de guidage (7) logeant un robinet-vanne (8) pour la recirculation des composants polymères, qui peut coulisser le long dudit axe longitudinal (AL), entre une position rétractée de non-recirculation et de distribution des jets dans un espace de mélange, et une position avancée pour la recirculation des composants polymères,
- ledit robinet-vanne (8) étant pourvu d'évidements longitudinaux (40) pour placer en communication, dans ladite position avancée, chaque orifice de buse (6) avec un conduit de recirculation (38, 41, 42, 43) respectif pour acheminer le composant polymère respectif jusqu'à un réservoir de collecte et de stockage,
- un élément d'étranglement et de commande en forme de goupille (9), logé de manière coulissante dans ledit corps creux (3), configuré pour faire varier une section active étroite dudit orifice de buse (6) pour convertir en énergie cinétique du jet l'énergie de pression du composant polymère respectif, ledit élément d'étranglement et de commande (9) étant mobile par rapport audit orifice de buse (6) le long dudit premier axe (A1),
- ledit élément d'étranglement et de commande (9) étant formé pour recevoir dudit composant polymère délivré dans ledit corps creux (3) une pression tendant à éloigner dudit orifice de buse (6) une partie formant embout (10) dudit élément d'étranglement et de commande (9) en faisant ainsi varier ladite section active étroite de celui-ci,
- une unité de réglage et de contraste (11) configurée pour exercer sur ledit élément d'étranglement et de commande (9) une action de précharge et de poussée appropriée pour installer ledit élément (9), de façon préliminaire, dans un état initial de positionnement et/ou de précharge qui est de nature à régler ladite section active étroite sur un débit et une pression de référence dudit composant polymère,
- ladite unité de réglage et de contraste (11) étant configurée de façon à s'étendre avec une dimension prévalente (D_{P}) dans une direction d'extension principale (D_{E}) qui est parallèle audit axe longitudinal (AL), de façon à réduire les dimensions globales de ladite tête de mélange (2) dans une direction transversale audit axe longitudinal (AL) et occuper un volume qui se développe de manière prévalente dans ladite direction d'extension principale (D_{E}),
**caractérisé en ce que**
ladite unité de réglage et de contraste (11) est configurée pour pouvoir modifier en continu, pendant un cycle d'injection, la position dudit élément (9) de façon à régler ladite section active étroite en réponse à de possibles variations du débit, intentionnelles ou provoquées par des perturbations sur la ligne d'alimentation, et à régler la position et/ou la force de contraste pour équilibrer et régler la pression exercée par ledit composant polymère afin de maintenir l'étage de pression constant, en dépit d'une possible variation du débit, et **en ce que** ladite unité de réglage et de contraste (11) est logée dans un corps de carter (13) en communication fluidique avec ledit corps creux (3) et s'étendant le long de ladite direction principale (D_{E}) parallèle audit axe longitudinal (A_{L}), dans lequel sur une paroi (36) dudit corps de carter (13) est obtenue une ouverture (37) appropriée pour placer la cavité dudit corps de carter (13) en communication fluidique avec un canal de recirculation (38, 41, 42, 43) obtenu dans ladite tête de mélange (2) de façon à envoyer à un réservoir de stockage approprié toute quantité de composant polymère qui pourrait s'échapper dudit corps creux (3) vers l'intérieur dudit corps de carter (13).

2. Dispositif d'injection selon la revendication 1, dans lequel ladite unité de réglage et de contraste (11) inclut des moyens formant ressort de flexion (12) s'étendant transversalement par rapport audit premier axe (A1) et pouvant tourner autour d'un axe de rotation (A_{R}), lesdits moyens formant ressort de flexion (12) étant logés à l'intérieur dudit corps de carter (13), dans lequel ledit corps de carter (13) s'étend le long de ladite direction d'extension principale (D_{E}) de manière à fournir une augmentation de volume disponible pour loger lesdits moyens formant ressort de flexion (12) et les éléments de précharge relatifs parallèlement audit axe longitudinal (AL), en évitant d'augmenter les dimensions globales latérales suivant la direction dudit premier axe (A1).

3. Dispositif d'injection selon la revendication 1 ou 2, dans lequel ledit canal de recirculation (38) est obtenu dans un corps de base (39) de ladite tête de mélange (2) et comprend une première branche de conduit (41), qui s'ouvre sur un évidement longitudinal (40) respectif dudit robinet-vanne (8), une deuxième branche de conduit (42), qui s'ouvre sur ladite ouverture de communication fluidique (37), et une troisième branche de conduit (43) formée pour collecter et acheminer les flux de composant polymère de ladite première branche de conduit (41) et de ladite deuxième branche de conduit (42) jusqu'audit réservoir de stockage.

4. Dispositif d'injection selon l'une quelconque des revendications 2 et 3, dans lequel ledit moyen formant ressort de flexion (12) est configuré pour faire varier, par limite élastique, la position dudit élément d'étranglement et de commande (9) pour régler ladite section active étroite dudit orifice de buse (6) sur le débit dudit composant polymère et équilibrer la pression exercée par le composant polymère.

5. Dispositif d'injection selon l'une quelconque des revendications 2 à 4, dans lequel ladite unité de réglage et de contraste (11) comprend en outre un organe de réglage (14) configuré pour régler une position angulaire dudit moyen formant ressort de flexion (12) autour dudit axe de rotation (A_{R}) pour modifier la force élastique exercée par ledit moyen formant ressort de flexion (12) sur ledit élément d'étranglement et de commande en forme de goupille (9) de façon à équilibrer ladite action de pression et commander la position de ladite partie formant embout (10) et ainsi l'ouverture dudit orifice de buse (6).

6. Dispositif d'injection selon l'une quelconque des revendications 2 à 5, dans lequel ledit moyen formant ressort de flexion (12) comprend une partie de préréglage de précharge (15) configurée pour interagir avec ledit organe de réglage (14) et une partie de poussée élastique (16), formée pour appliquer une poussée à une extrémité arrière (17) dudit élément en forme de goupille (9) opposée à ladite partie formant embout (10), ledit axe de rotation (A_{R}) étant prévu dans une zone charnière (18) dudit moyen formant ressort de flexion (12) intercalée entre ladite partie de poussée élastique (16) et ladite partie de préréglage de précharge (15).

7. Dispositif d'injection selon la revendication 6, dans lequel ledit moyen formant ressort de flexion comprend une barre de flexion en lamelle (12) qui s'étend d'une manière agencée transversalement audit premier axe (A1), ladite partie de poussée élastique (16) s'effilant progressivement jusqu'à une extrémité de poussée (19) dudit élément de flexion en lamelle (12) opposée audit organe de réglage (14).

8. Dispositif d'injection selon la revendication 6 ou 7, dans lequel ladite partie de poussée élastique (16) s'étend sur une première longueur (L1) et a une première épaisseur (T1) qui diminue progressivement passant d'une première valeur près dudit axe de rotation (A_{R}), à une seconde valeur comprise à l'extrémité de celui-ci qui est plus éloignée dudit axe de rotation (A_{R}), la section de ladite partie élastique (16) ayant, à ladite extrémité plus éloignée, une valeur d'aire (S2) respective inférieure à la valeur d'aire (S1) dans une zone plus proche dudit axe de rotation (A_{R}), cette configuration étant de nature à optimiser l'état de contrainte par rapport au volume de ladite barre de flexion en lamelle (12).

9. Dispositif d'injection selon l'une quelconque des revendications 6 à 8, dans lequel ladite partie de préréglage de précharge (15) s'effile en allant d'une zone près dudit axe de rotation (AR) jusqu'à une extrémité plus éloignée près dudit organe de réglage (14), a une deuxième longueur (L2) inférieure à ladite première longueur (L1), et comprend une surface de contact et de coulissement (20) pour ledit organe de réglage (14) qui est inclinée par rapport à un axe longitudinal (Ax) de ladite partie élastique (16) de façon à définir une zone de rampe qui, par une action de poussée axiale dudit organe de réglage (14) permet d'actionner la précharge, ladite partie de préréglage de précharge (15) ayant une section qui varie de manière à optimiser l'état de contrainte et en même temps à obtenir la zone de rampe précitée.

10. Dispositif d'injection selon la revendication 5, dans lequel ledit organe de réglage (14) inclut une goupille-poussoir (21), s'étendant et mobile le long de ladite direction d'extension principale (DE), comprenant une extrémité de repos et de prépositionnement (22) pour ledit moyen formant ressort de flexion (12), ladite goupille-poussoir (21) étant logée à l'intérieur d'un élément creux de logement et de guidage (28) et comprenant une partie agrandie (27), pouvant coulisser à l'intérieur dudit élément creux de guidage et de logement (28), qui est pourvue de sièges (29) appropriés pour loger des moyens d'étanchéité.

11. Dispositif d'injection selon la revendication 10, dans lequel ladite goupille-poussoir (21) comprend une partie formant vis (60), qui vient en prise, via un raccord fileté (61), avec une partie dudit élément creux de logement et de guidage (28), ladite partie formant vis (60) permettant un réglage de la position de ladite goupille-poussoir (21) le long de ladite direction d'extension principale (D_{E}).

12. Dispositif d'injection selon la revendication 10, dans lequel ledit organe de réglage (14) inclut des moyens formant ressort antagoniste (23) qui sont appropriés pour agir sur ladite goupille-poussoir (21) dans une direction s'éloignant dudit moyen formant ressort de flexion (12), et des moyens formant piston (24) reliés à ladite goupille-poussoir (21) et mobiles dans une chambre (25) pouvant être alimentée en un fluide fonctionnel sous pression pour régler axialement la position de ladite goupille-poussoir (21) et par conséquent la position angulaire de préchargement dudit moyen formant ressort de flexion (12) autour dudit axe de rotation (A_{R}), dans lequel ladite chambre (25) peut être reliée à un circuit hydraulique comprenant une unité de commande (62) pour faire varier la pression dudit fluide fonctionnel de manière à commander la position de ladite goupille-poussoir (21).

13. Dispositif d'injection selon la revendication 12, lorsque la revendication 10 est annexée à l'une quelconque des revendications 2 à 9, dans lequel ladite goupille-poussoir (21) peut coulisser à l'intérieur d'un corps de logement (26) couplé axialement audit corps de carter (13) et s'étendant le long de ladite direction d'extension principale (D_{E}), lesdits moyens formant ressort antagoniste (23) étant logés dans ledit corps de logement (26), dans lequel ladite extrémité de repos et de prépositionnement (22) fait saillie d'une manière réglable à l'intérieur dudit corps de carter (13) pour agir sur ledit moyen formant ressort de flexion (12).

14. Dispositif d'injection selon l'une quelconque des revendications 1 à 9, dans lequel ladite unité de réglage et de contraste (11) comprend un élément de poussée (31) monté sur un arbre d'entraînement (30) qui tourne autour d'un axe d'entraînement (Az) qui est orthogonal audit premier axe (A1), ledit élément de poussée (31) comprenant une surface de poussée (32) ayant des zones placées à différentes distances dudit axe d'entraînement (Az) de façon à exercer sur ledit élément en forme de goupille (9) une action qui est variable en fonction de la position angulaire dudit arbre d'entraînement (30), des moyens étant prévus en outre pour commander la position angulaire dudit arbre d'entraînement (30).

15. Dispositif d'injection selon la revendication 14, dans lequel ladite unité de réglage et de contraste (11) est configurée pour entraîner ledit élément de poussée (31) à pousser et repositionner en continu ledit élément d'étranglement en forme de goupille (9) et de façon à maintenir la section active étroite dudit orifice de buse (6) adéquate pour le débit de fluide en équilibrant constamment la pression exercée par le composant polymère.

16. Dispositif d'injection selon la revendication 14 ou 15, dans lequel ladite unité de réglage et de contraste (11) comprend un moteur électrique (33) couplé à un réducteur mécanique (34) pour faire tourner ledit arbre d'entraînement (30), une unité de commande (62) reliée fonctionnellement audit moteur électrique (33) étant prévue pour entraîner d'une manière contrôlée ledit élément de poussée (31) et positionner ledit élément en forme de goupille (9) pour régler la section active étroite dudit orifice de buse (6) sur le débit dudit composant polymère.

17. Dispositif d'injection selon l'une quelconque des revendications 14 à 16, dans lequel ledit élément de poussée comprend un élément formant palier (31) monté de façon excentrée sur ledit arbre d'entraînement (30), et ayant un élément annulaire externe (35) sur lequel est obtenue ladite surface de poussée (32).

18. Dispositif d'injection selon l'une quelconque des revendications 14 à 16, dans lequel ledit élément de poussée comprend une partie formant came clavetée sur ledit arbre d'entraînement (30).

19. Dispositif d'injection selon l'une quelconque des revendications 14 à 18, telle qu'annexée à l'une quelconque des revendications 6 à 9, dans lequel ledit élément de poussée (31) est positionné de manière à être en contact avec ladite partie réglage de précharge (15) dudit moyen formant ressort de flexion (12).

20. Dispositif d'injection selon l'une quelconque des revendications 14 à 18, telle qu'annexée à la revendication 1, dans lequel ledit élément de poussée (31) est positionné de manière à entraîner directement ledit élément en forme de goupille (9), ledit élément de poussée (31) étant formé pour venir en contact avec une extrémité arrière (17) dudit élément en forme de goupille (9) et exercer une action de butée et de poussée sur celle-ci.

21. Dispositif d'injection selon la revendication 20, dans lequel ledit arbre d'entraînement (30) est agencé de façon à pouvoir tourner autour d'un axe d'entraînement (Az) qui est parallèle audit axe longitudinal (A_{L}).

22. Dispositif d'injection selon l'une quelconque des revendications précédentes, dans lequel ladite unité de réglage et de contraste (11) est indépendante dudit robinet-vanne (8) et configurée pour agir de façon autonome par rapport à celui-ci.

23. Appareil comprenant une tête (2) pour mélanger au moins deux composants polymères actifs et au moins deux dispositifs d'injection (1) selon l'une quelconque des revendications précédentes, chaque dispositif d'injection (1) étant pour un composant polymère respectif, lesdits dispositifs d'injection (1) étant répartis angulairement uniformément autour dudit axe longitudinal (A_{L}), dans lequel chaque unité de réglage et de contraste (11) est configurée pour entraîner l'élément d'étranglement et de commande (9) respectif de manière autonome et indépendante vis-à-vis de la ou les unités de réglage et de contraste (11) couplées à l'autre ou aux autres éléments d'étranglement et de commande (9).

24. Procédé d'utilisation d'un dispositif d'injection selon l'une quelconque des revendications 1 à 22, pour introduire un composant polymère dans une tête de mélange (2) et pour le mélanger par turbulence à au moins un deuxième composant polymère pour produire des mousses et des résines polymères réactives et des pièces moulées, comprenant :
- l'introduction d'un composant polymère, par une ouverture d'alimentation (4), à l'intérieur d'un corps creux (3) s'étendant le long d'un premier axe (A1) et ayant un orifice de buse (6) formé de manière à faire face à un conduit de mélange et de guidage (7) de ladite tête de mélange (2) qui s'étend le long d'un axe longitudinal (AL) qui est agencé transversalement par rapport audit premier axe (A1) et communiquer avec celui-ci, ledit conduit de mélange et de guidage (7) logeant un robinet-vanne (8), pour la recirculation du composant polymère, qui peut coulisser le long dudit axe longitudinal (AL) entre une position rétractée de non-recirculation et de distribution des jets dans un espace de mélange, et une position avancée pour la recirculation des composants polymères, ledit robinet-vanne (8) agissant, via des évidements longitudinaux (40) dont il est pourvu, pour placer, dans ladite position avancée, chaque orifice de buse (6) en communication avec un conduit de recirculation (38, 41, 42, 43) respectif pour acheminer le composant polymère respectif jusqu'à un réservoir de collecte et de stockage,
- le déplacement par rapport audit orifice de buse (6) et le long dudit premier axe (A1) d'un élément d'étranglement et de commande en forme de goupille (9) logé de manière coulissante dans ledit corps creux (3) de façon à faire varier une section active étroite dudit orifice de buse (6) pour convertir en énergie cinétique du jet l'énergie de pression du composant polymère respectif,
- la configuration dudit élément d'étranglement et de commande (9) pour recevoir dudit composant polymère délivré dans ledit corps creux (3) une pression tendant à éloigner dudit orifice de buse (6) une partie formant embout (10) dudit élément d'étranglement et de commande (9), en faisant ainsi varier ladite section active étroite de celui-ci,
- l'exercice sur ledit élément d'étranglement et de commande (9), par une unité de réglage et de contraste (11), d'une action de précharge et de poussée appropriée pour installer ledit élément (9), de façon préliminaire, dans un état initial de positionnement et/ou de précharge qui est de nature à régler ladite section active étroite sur un débit et une pression de référence dudit composant polymère,
- et la variation successive continue de la position dudit élément (9) pour régler ladite section active étroite en fonction de la variation du débit et régler la position et/ou la force de contraste pour équilibrer et régler la pression exercée par ledit composant polymère,
- la configuration de ladite unité de réglage et de contraste (11) de façon telle que ladite unité de réglage et de contraste (11) s'étend avec une dimension prévalente (D_{P}) dans une direction d'extension principale (D_{E}) qui est parallèle audit axe longitudinal (AL), de façon à réduire les dimensions globales de ladite tête de mélange (2) dans une direction transversale audit axe longitudinal (AL) et occuper un volume qui se développe de manière prévalente dans ladite direction d'extension principale (D_{E}),
- le logement de ladite unité de réglage et de contraste (11) dans un corps de carter (13) en communication fluidique avec ledit corps creux (3) et s'étendant le long de ladite direction principale (D_{E}) parallèle audit axe longitudinal (A_{L}),
**caractérisé en ce qu'**il est prévu, au travers de ladite unité de réglage et de contraste (11), de faire varier en continu, pendant un cycle d'injection, la position dudit élément (9) de façon à régler ladite section active étroite en réponse à une variation du débit, intentionnelle ou provoquée par des perturbations sur la ligne d'alimentation, et à régler la position et/ou la force de contraste pour équilibrer et régler la pression exercée par ledit composant polymère afin de maintenir l'étage de pression constant, en dépit d'une possible variation du débit,
et **en ce que** la cavité dudit corps de carter (13) est placée en communication fluidique avec un canal de recirculation (38, 41, 42, 43) obtenu dans ladite tête de mélange (2) par une ouverture (37) obtenue sur une paroi (36) dudit corps de carter (13) de façon à envoyer jusqu'à un réservoir de stockage approprié toute quantité de composant polymère qui, en s'échappant entre ledit élément d'étranglement et de commande (9) et ledit corps creux (3), atteint ledit corps de carter (13).

25. Procédé selon la revendication 24, dans lequel il est prévu d'exercer sur ledit élément d'étranglement et de commande (9) une action de poussée et de précharge par des moyens formant ressort de flexion (12) inclus dans ladite unité de réglage et de contraste (11), qui agissent pour adapter la précharge à la fois en réponse à la variation du débit du composant polymère et dans le cas de variations accidentelles de ladite section active étroite provoquées par des particules obstructives, lesdits moyens formant ressort de flexion (12) s'étendant transversalement audit premier axe (A1), pouvant tourner autour d'un axe de rotation (A_{R}), et étant logés à l'intérieur d'un corps de carter (13) qui s'étend le long de ladite direction d'extension principale (D_{E}) de façon à fournir une augmentation de volume disponible pour un logement desdits moyens formant ressort de flexion (12) parallèlement audit axe longitudinal (AL).
